# EUROPÄISCHE PATENTSCHRIFT

(11) **EP 3 695 205 B1**
(45) Veröffentlichungstag und Bekanntmachung des Hinweises auf die Patenterteilung: **14.01.2026**
(21) Anmeldenummer: 18782684.7
(22) Anmeldetag: 28.09.2018
(51) Int. Cl.: G01N 17/00, G01N 17/04

(54) **ÜBERWACHUNGSVORRICHTUNG UND VERFAHREN ZUR ÜBERWACHUNG EINER KORROSION EINES DRAHTNETZES**
MONITORING DEVICE AND METHOD FOR MONITORING CORROSION OF A WIRE MESH
DISPOSITIF DE SURVEILLANCE ET PROCÉDÉ POUR LA SURVEILLANCE D'UNE CORROSION D'UN TREILLIS MÉTALLIQUE

(30) Priorität: 12.10.2017 DE 102017123810
(43) Veröffentlichungstag der Anmeldung: 19.08.2020
(73) Patentinhaber: Geobrugg AG, 8590 Romanshorn (CH)
(72) Erfinder: WENDELER-GÖGGELMANN, Corinna, 9100 Herisau (CH)
(74) Vertreter: Daub, Thomas
(86) Internationale Anmeldenummer: PCT/EP2018/076389
(87) Internationale Veröffentlichungsnummer: WO 2019/072587

(56) Entgegenhaltungen:
- EP-A2- 2 275 800
- WO-A1-2005/120744
- DE-C1- 3 629 704
- DE-U1- 202004 004 766
- US-B1- 8 111 078
- MIZUNO DAISUKE ET AL: "Corrosion monitoring and materials selection for automotive environments by using Atmospheric Corrosion Monitor (ACM) sensor", CORROSION SCIENCE, OXFORD, GB, vol. 83, 19 February 2014 (2014-02-19), pages 217 - 225, XP028837080, ISSN: 0010-938X, DOI: 10.1016/J.CORSCI.2014.02.020
- F. DEFLORIAN ET AL: "Corrosion behaviour of steel ropes for snow and rockfall barriers", CORROSION ENGINEERING, SCIENCE AND TECHNOLOGY, vol. 39, no. 3, 1 September 2004 (2004-09-01), GB, pages 250 - 254, XP055550078, ISSN: 1478-422X, DOI: 10.1179/147842204X2853
- ANDREA LUCIANI ET AL: "Politecnico di Torino Porto Institutional Repository [Proceeding] MAINTENANCE OF ROCKFALL NET FENCES MAINTENANCE OF ROCKFALL NET FENCES", 6TH INTERDISCIPLINARY WORKSHOP ON ROCKFALL PROTECTION ROCEXS 2017, 1 July 2017 (2017-07-01), pages 22 - 24, XP055550067
- JÜRGEN SUDA ET AL: "Technischer Steinschlagschutz Handbuch zur Durchführung einer Bauwerkskontrolle", 21 October 2013 (2013-10-21), XP055549806, Retrieved from the Internet <URL:https://www.bmnt.gv.at/dam/jcr:8e2227ab-6ec5-437b-8d99-c6c6e642354d/Handbuch_Steinschlag_20131021.pdf> [retrieved on 20190131]
- TÜV SÜD CHEMIE SERVICE GMBH: "Korrosionsüberwachung mit Coupons leichtgemacht - Werkstoffprobenhalter für den betrieblichen Einsatz", 15 June 2001 (2001-06-15), XP055550993, Retrieved from the Internet <URL:https://www.tuev-sued.de/uploads/images/1433839673920559861316/ac990-korrueb-kb-210x297-w-15-06-01.pdf> [retrieved on 20190204]

## Beschreibung

### Stand der Technik

Die Erfindung betrifft eine Drahtnetzüberwachungsvorrichtung und ein Verfahren zur Überwachung einer Korrosion eines Drahtnetzes.

Die Aufgabe der Erfindung besteht insbesondere darin, eine gattungsgemäße Vorrichtung und ein Verfahren mit vorteilhaften Eigenschaften hinsichtlich einer Sicherheit bereitzustellen. Die Aufgabe wird erfindungsgemäß durch die Merkmale der Patentansprüche 1 und 14 gelöst, während vorteilhafte Ausgestaltungen und Weiterbildungen der Erfindung den Unteransprüchen entnommen werden können.

### Vorteile der Erfindung

Die Erfindung geht aus von einer Drahtnetzüberwachungsvorrichtung für ein Drahtnetz, insbesondere für ein Schutznetz zu einem Stabilisieren, insbesondere von statischen Bauwerken, und/oder zu einem Auf- und/oder Abfangen und/oder Zurückhalten von schweren Lasten, mit zumindest zwei ineinandergreifenden Netzelementen, von denen wenigstens ein Netzelement aus zumindest einem Einzeldraht, einem Drahtbündel, einer Drahtlitze, einem Drahtseil und/oder einem anderen Längselement mit zumindest einem, insbesondere aus einem hochfesten Stahl gefertigten, Draht gefertigt ist.

Die Drahtnetzüberwachungsvorrichtung weist zumindest eine Korrosionsüberwachungseinheit auf, welche dazu vorgesehen ist, zumindest einen Korrosionsindikator zu überwachen. Dadurch können insbesondere vorteilhafte Eigenschaften, insbesondere des Drahtnetzes, hinsichtlich einer Sicherheit bereitgestellt werden. Vorteilhaft kann eine Schutzwirkung und/oder eine Beständigkeit eines Drahtnetzes, insbesondere einer Drahtnetz-Installation, überwacht werden, wodurch insbesondere Fehlfunktionen vermieden werden können. Insbesondere kann vorteilhaft eine einfache Bestimmung einer Lebensdauer eines Drahtnetzes ermöglicht werden, insbesondere kann ein Ende einer Lebensdauer festgestellt werden und/oder eine Restlebensdauer abgeschätzt werden. Zudem kann vorteilhaft eine Fernüberwachung ermöglicht werden, wodurch eine direkte vor-Ort-Überwachung durch eine Person vorteilhaft ersetzt werden kann, wodurch insbesondere Kosten, Arbeitsbelastungen und/oder Unfallgefahren, insbesondere da Drahtnetze häufig an unzugänglichen, unsicheren Geländen installiert sind, reduziert werden können. Des Weiteren können vorteilhaft Daten über standortabhängige Korrosion gesammelt werden, wodurch eine Anpassung von Drahtnetzeigenschaften an bestimmte Umgebungsbedingungen bei zukünftigen Installationen von Drahtnetzen an vergleichbaren Orten ermöglicht werden kann. Dadurch kann insbesondere eine Effizienz verbessert werden. Zudem ist vorstellbar, dass die Überwachungsvorrichtung dazu vorgesehen ist, eine Korrosivität eines Standorts unabhängig von einem Drahtnetz, insbesondere vor einer Installation eines Drahtnetzes, zu ermitteln und/oder abzuschätzen. Dazu kann vorteilhaft die Korrosionsüberwachungseinheit unabhängig von einem Drahtnetz an dem Standort aufgebaut werden und insbesondere mittels des ermittelten Korrosionsindikators auf eine Korrosivität einer Umgebung an einem Standort geschlossen werden. Dadurch kann vorteilhaft eine Vorabschätzung von Standortbedingungen ermöglicht werden, wodurch insbesondere eine Auslegung einer baulichen Anlage, beispielsweise eines Schutznetzes, an dem Standort optimiert werden kann.

Insbesondere ist das Drahtnetz als eine Böschungssicherung, als ein Sicherheitszaun, als ein Fangzaun, als ein Steinschlag-Schutznetz, als ein Absperrzaun, als ein Fischfarming-Netz, als ein Raubtier-Schutznetz, als ein Gehegezaun, als eine Tunnelsicherung, als ein Hangmurenschutz, als ein Motorsport-Schutzzaun, als ein Straßenzaun, als eine Lawinensicherung oder dergleichen ausgebildet. Insbesondere aufgrund seiner hohen Festigkeit und/oder Belastbarkeit sind auch Anwendungen als Abdeckung und/oder Umhüllung, beispielsweise von Kraftwerken, Fabrikgebäuden, Wohnhäuser oder anderen Gebäuden, als Explosionsschutz, als Geschossschutz, als Abschirmung gegen fliegende Objekte, als Fangnetz, als Rammschutz oder dergleichen denkbar. Das Drahtnetz kann beispielsweise horizontal oder vertikal oder schräg, insbesondere relativ zu einem Untergrund, ausgelegt und/oder angeordnet und/oder montiert sein. Insbesondere ist das Drahtnetz flächig ausgebildet. Vorteilhaft ist das Drahtnetz regelmäßig und/oder in zumindest eine Richtung periodisch aufgebaut. Unter "schweren Lasten" sollen insbesondere, vorzugsweise einteilige, Lasten mit einem Gewicht von zumindest 1 kg, vorzugsweise zumindest 10 kg, bevorzugt zumindest 100 kg oder besonders bevorzugt zumindest 1000 kg verstanden werden. Unter "einteilig" soll insbesondere in einem Stück geformt verstanden werden.

Unter einem "Netzelement" soll insbesondere ein, insbesondere vereinzelbares, Grundelement des Drahtnetzes, vorzugsweise des Schutznetzes, verstanden werden, welches mittels eines Ineinandergreifens mit benachbarten Grundelementen das Drahtnetz, insbesondere das Schutznetz ausbildet. Das Netzelement ist insbesondere als filamentartiges Gebilde, insbesondere Drahtgebilde, beispielsweise aus zumindest einem Einzeldraht, zumindest einem Drahtbündel, zumindest einer Drahtlitze und/oder zumindest einem Drahtseil, ausgebildet. Das filamentartige Gebilde, insbesondere Drahtgebilde, kann insbesondere zwei offene Enden aufweisen oder in sich geschlossenen sein. Vorzugsweise liegt das filamentartige Gebilde, insbesondere Drahtgebilde, in einem unbelasteten Zustand zumindest im Wesentlichen in einer Ebene. Das Netzelement kann insbesondere eine unregelmäßige Form oder vorzugsweise eine regelmäßige Form aufweisen, welche zumindest teilweise eine Form eines Kreises, einer Raute und/oder eines gleichmäßigen und/oder unregelmäßigen Polygons darstellt. Insbesondere können verschiedene Netzelemente des Sicherheitsnetzes verschiedene Formen aufweisen, bevorzugt weisen die Netzelemente jedoch eine zumindest im Wesentlichen identische Form auf. Bevorzugt ist das Netzelement als ein Wendel, insbesondere ein flachgedrückter Wendel oder als ein Ring, insbesondere ein Drahtring, ausgebildet. Insbesondere bildet das Netzelement ein Netzglied eines Ringnetzes oder einen Wendel eines Maschennetzes zumindest teilweise aus. Vorzugsweise soll unter "zumindest im Wesentlichen identisch" abgesehen von Fertigungstoleranzen und/oder im Rahmen fertigungstechnischer Möglichkeiten identisch verstanden werden.

Vorteilhaft ist der Draht, insbesondere das Drahtbündel, die Drahtlitze, das Drahtseil und/oder das andere Längselement mit dem zumindest einen Draht, zumindest teilweise, insbesondere abgesehen von einer Beschichtung, vollständig aus hochfestem Stahl gefertigt. Vorzugsweise ist der Draht ein hochfester Stahldraht. Beispielsweise kann es sich bei dem hochfesten Stahl um Federstahl und/oder Drahtstahl und/oder einen für Drahtseile geeigneten Stahl handeln. Insbesondere weist der Draht eine Zugfestigkeit von wenigstens 800 N mm⁻², vorteilhaft von wenigstens 1000 N mm⁻², besonders vorteilhaft von wenigstens 1200 N mm⁻², vorzugsweise von wenigstens 1400 N mm⁻² und besonders bevorzugt von wenigstens 1600 N mm⁻², insbesondere eine Zugfestigkeit von etwa 1770 N mm⁻² oder von etwa 1960 N mm⁻² auf. Es ist auch denkbar, dass der Draht eine noch höhere Zugfestigkeit aufweist, beispielsweise eine Zugfestigkeit von wenigstens 2000 N mm⁻², oder von wenigstens 2200 N mm⁻², oder auch von wenigstens 2400 N mm⁻². Hierdurch kann eine hohe Belastbarkeit, insbesondere eine hohe Zugfestigkeit und/oder eine hohe Steifigkeit quer zum Drahtnetz erzielt werden. Außerdem können vorteilhafte Biegeeigenschaften erzielt werden. Insbesondere ist der Draht, vorzugsweise eine Mehrzahl an Drähten, dazu vorgesehen, ein, insbesondere aus Netzelementen, vorzugsweise Wendeln und/oder Ringen, bestehendes, Drahtgeflecht zumindest teilweise auszubilden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Der Korrosionsindikator umfasst zumindest eine durch eine Korrosion beeinflussbare Eigenschaft, insbesondere Materialeigenschaft und/oder Materialbeschaffenheit, insbesondere zumindest eines Teils des Drahtnetzes und/oder zumindest eines Teils eines von dem Drahtnetz separat ausgebildeten Element, welches indikativ für eine Korrosion des Drahtnetzes ist und/oder vorzugsweise zumindest im Wesentlichen identischen Umgebungs- und/oder Witterungsbedingungen ausgesetzt ist wie das Drahtnetz. Vorzugsweise ist mittels des Korrosionsindikators ein Status, und, erfindungsgemäß, eine, insbesondere momentane, Stärke und/oder ein Fortschritt einer Korrosion, insbesondere zumindest eines Teils des Drahtnetzes, bestimmbar. Der Korrosionsindikator umfasst insbesondere zumindest eine Oberflächenfärbung, beispielweise eine Rostfärbung, zumindest eine Oberflächenbeschaffenheit, zumindest einen Gewichtsverlust, zumindest eine Reißfestigkeit, zumindest eine Schwingfrequenz, insbesondere Resonanzschwingfrequenz, eine elektrische Leitfähigkeit und/oder einen ohmschen Widerstand zumindest eines Teils des Drahts des Drahtnetzes und/oder zumindest eines Teils des von dem Drahtnetz separat ausgebildeten Elements und/oder vorzugsweise einen Stromfluss, insbesondere zwischen zumindest zwei, vorzugsweise separat vom Drahtnetz ausgebildeten, Elektroden. Die Korrosionsüberwachungseinheit ist insbesondere dazu vorgesehen, den Korrosionsindikator zu erfassen, zu registrieren und/oder vorzugsweise zu sensieren und insbesondere einem Benutzer zugänglich zu machen und/oder automatisch mit einer Datenbank abzugleichen zu einer Abschätzung eines Zustands, einer Funktionstüchtigkeit und/oder einer Sicherheit des Drahtnetzes.

Die Korrosionsüberwachungseinheit weist zumindest ein Korrosionskontrollelement auf, welches dazu vorgesehen ist, zumindest Teilinformationen zur Bestimmung des Korrosionsindikators zu liefern. Dadurch kann vorteilhaft eine einfache Korrosionsbestimmung ermöglicht werden, wodurch vorteilhaft eine Sicherheit, insbesondere eines überwachten Drahtnetzes, erhöht werden kann. Zudem kann das Korrosionskontrollelement vorteilhaft an einer Vielzahl, vorzugsweise beliebig auswählbarer, Stellen eines Drahtnetzes positioniert werden. Vorzugsweise ist das Korrosionskontrollelement von dem Drahtnetz getrennt ausgebildet. Insbesondere ist das Korrosionskontrollelement frei von einem elektrisch leitenden Kontakt mit dem Drahtnetz. Alternativ ist vorstellbar, dass das Korrosionskontrollelement als eine Opferanode ausgebildet ist. Erfindungsgemäß ist das Korrosionskontrollelement zumindest im Wesentlichen identischen Umgebungs- und/oder Witterungsbedingungen ausgesetzt, wie zumindest ein Teil des Drahtnetzes. Insbesondere ist das Korrosionskontrollelement zumindest teilweise dazu vorgesehen, zumindest teilweise zu korrodieren, wobei eine Korrosion, insbesondere ein Status, eine Stärke und/oder ein Fortschritt einer Korrosion, des Korrosionskontrollelements indikativ für eine Korrosion, insbesondere einen Status, eine Stärke und/oder einen Fortschritt einer Korrosion, zumindest eines Teils des Drahtnetzes ist. Eine Korrosion umfasst insbesondere Weißrost, Rotrost und/oder weitere oxidierende, insbesondere materialabtragende und/oder Materialeigenschaften, beispielsweise Festigkeit und/oder Sprödheit, verändernde chemische und/oder physikalische Vorgänge. Insbesondere kann das Korrosionskontrollelement ein Korrosionselement ausbilden. Insbesondere kann das Korrosionselement ein Korrosionskontrollelement ausbilden.

Erfindungsgemäß ist das Korrosionskontrollelement zumindest teilweise als ein ACM (Atmospheric Corrosion Monitor) Sensor ausgebildet.

Dadurch kann vorteilhaft eine einfache und/oder zuverlässige Korrosionsbestimmung ermöglicht werden, wodurch vorteilhaft eine Sicherheit, insbesondere eines überwachten Drahtnetzes, erhöht werden kann. Vorteilhaft kann ein zu einer Korrosion, insbesondere einer Materialabtragung, insbesondere einer Beschichtung, des Korrosionskontrollelements proportionaler Stromfluss erzielt werden, aus welchem vorteilhaft ein zeitlicher Verlauf eines Materialabtrags, ein momentaner Materialabtrag und/oder eine aktuelle Materialreststärke des Korrosionskontrollelements und/oder der Beschichtung des Korrosionskontrollelements ermittelt werden kann. Vorteilhaft kann mittels einer ausreichend langen Bestimmung eines zeitlichen Verlaufs eines Materialabtrags, beispielsweise innerhalb eines oder mehrerer Jahre, eine Zeitdauer bis zu einer vollständigen Abtragung einer bestimmten Materialstärke extrapoliert werden. Dadurch kann vorteilhaft eine Lebensdauerabschätzung eines Drahtnetzes ermöglicht werden. Insbesondere ist der ACM Sensor dazu vorgesehen, eine Korrosivität einer Umgebung und/oder Korrosionsraten, insbesondere Abtragraten von Metallen und/oder Legierungen, erfindungsgemäß anhand von einem zwischen Metallen und/oder Legierung fließenden galvanischen Strom, zu bestimmen. Erfindungsgemäß umfasst der ACM Sensor zumindest zwei Elektroden, welche, im trockenen Zustand, elektrisch voneinander isoliert sind. Die Elektroden sind insbesondere zumindest teilweise aus unterschiedlichen Materialien, vorzugsweise unterschiedlich edlen Metallen, ausgebildet. Es wird beansprucht, dass zumindest die Anode ausbildende Elektrode zumindest eine Beschichtung aufweist, wodurch sich zumindest die Oberflächenmaterialien zumindest zweier Elektroden unterscheiden. Erfindungsgemäß sind die Oberflächenmaterialien aus unterschiedlich edlen Metallen ausgebildet. Vorteilhaft ist zumindest eine Elektrode im Wesentlichen identisch zu zumindest einem Teilstück eines Drahts des Drahtnetzes ausgebildet. Dadurch kann vorteilhaft eine möglichst gute Übertragbarkeit der an dem Korrosionskontrollelement gemessenen Materialabtragung auf eine Materialabtragung des Drahtnetzes erreicht werden. Vorteilhaft ist zumindest eine weitere Elektrode des ACM Sensors zumindest teilweise aus einem edleren Material ausgebildet als die Elektrode, welche im Wesentlichen identisch zu dem Teilstück des Drahts ausgebildet ist. Das edlere Material kann insbesondere Stahl, Silber, Gold, Cobalt, Nickel, Kupfer, Platin, Palladium, ein weiteres in einer elektrochemischen Spannungsreihe über Zink stehendes Element und/oder eine in der elektrochemischen Spannungsreihe über Zink stehende Legierung umfassen. Insbesondere sind die Elektroden, insbesondere die Elektroden unterschiedlichen Oberflächenmaterials, zueinander berührungsfrei angeordnet. Insbesondere sind die Elektroden, insbesondere die Elektroden unterschiedlichen Oberflächenmaterials, frei von direkten gegenseitigen elektrischen Kontakten. Erfindungsgemäß sind die Elektroden, insbesondere die Elektroden unterschiedlichen Oberflächenmaterials, in einem nassen Zustand über ein Elektrolyt bildende Wassertröpfchen elektrisch in Kontakt. Erfindungsgemäß fließt bei einer elektrischen Kontaktierung der Elektroden ein galvanischer Strom. Der galvanische Stromfluss bewirkt insbesondere einen Materialabtrag und/oder eine Korrosion der unedleren Elektrode. Der Stromfluss ist vorteilhaft proportional zu dem Materialabtrag. Ein Vorhandensein und/oder Eigenschaften, insbesondere Korrosionseigenschaften, des Elektrolyts sind insbesondere abhängig von Umgebungsbedingungen, welchen das Korrosionskontrollelement zu einem bestimmten Zeitpunkt ausgesetzt ist, wodurch vorteilhaft auf eine Korrosivität der Umgebungsbedingungen zu dem Zeitpunkt geschlossen werden kann.

Außerdem wird vorgeschlagen, dass das Korrosionskontrollelement als ein Stäbchenindikator mit einer Mehrzahl an unterschiedlich beschichteten Korrosionskontrollstäbchen ausgebildet ist. Dadurch kann vorteilhaft eine einfache und/oder kostengünstige Korrosionsbestimmung ermöglicht werden, wodurch vorteilhaft eine Sicherheit, insbesondere eines überwachten Drahtnetzes, erhöht werden kann. Der Stäbchenindikator weist insbesondere Halterungen für zumindest zwei, vorzugsweise zumindest vier, bevorzugt zumindest sechs und besonders bevorzugt zumindest acht Korrosionskontrollstäbchen auf. Der Stäbchenindikator ist insbesondere dazu vorgesehen, die Korrosionskontrollstäbchen so zu haltern, dass die Korrosionskontrollstäbchen einer im Wesentlichen identischen Korrosion ausgesetzt sind wie das zu überwachende Drahtnetz. Insbesondere weisen die Korrosionskontrollstäbchen zumindest eine Beschichtung mit jeweils unterschiedlichen Beschichtungsdicken auf. Vorzugsweise sind die Korrosionskontrollstäbchen in dem Stäbchenindikator nach auf- und/oder absteigender Beschichtungsdicke sortiert angeordnet. Insbesondere ist die Beschichtungsdicke des Korrosionskontrollstäbchens mit einer maximalen Beschichtungsdicke im Wesentlichen identisch zu einer Beschichtungsdicke eines Drahts des zu überwachenden Drahtnetzes. Dadurch kann vorteilhaft eine gute Übertragbarkeit einer an dem Stäbchenindikator beobachteten Korrosion auf einen Zustand des zu überwachenden Drahtnetzes ermöglicht werden. Die Beschichtungsdicken der weiteren Korrosionskontrollstäbchen sind geringer, beispielsweise 10%, 20%, 30%, 40%, 50%, 60%, 70%, 80% und/oder 90% der maximalen Beschichtungsdicke. Alternativ weisen die Korrosionskontrollstäbchen Zinkbeschichtungen mit Beschichtungsdicken von 25 g/m², 50 g/m², 100 g/m², 150 g/m², 200 g/m², 250 g/m² und 300 g/m² oder 5 g/m², 10 g/m², 20 g/m², 40 g/m², 80 g/m², 160 g/m² und 320 g/m² auf. Zudem ist vorstellbar, dass zumindest ein Korrosionskontrollstäbchen eine Beschichtungsdicke aufweist, welche größer ist als die Beschichtungsdicke des Drahts des zu überwachenden Drahtnetzes. Vorteilhaft kann ein Fortschritt und/oder Status einer Korrosion einfach mittels optischer Kontrolle des Stäbchenindikators abgelesen werden. Insbesondere anhand einer Anzahl an Korrosionskontrollstäbchen des Stäbchenindikators, welche nach einer bestimmten Auslagerungszeit Korrosionserscheinungen, wie beispielsweise Weißrost und/oder Rotrost, aufweisen, kann ein Fortschritt und/oder Status einer Korrosion ermittelt werden. Es ist denkbar, dass der Stäbchenindikator unabhängig von einem Drahtnetz und/oder vor einer geplanten Montage eines Drahtnetzes an einem Ort aufgestellt wird, insbesondere zu einer Beurteilung einer Korrosivität einer Umgebung an einem bestimmten Standort. Dadurch kann vorteilhaft eine Optimierung eines Drahtnetzes vor einer Installation ermöglicht werden, beispielsweise mittels einer Anpassung der Beschichtungsdicke an eine an dem Standort zu erwartende Korrosion. Zudem kann ein Stäbchenindikator insbesondere Korrosionskontrollstäbchen mit unterschiedlichen Materialien, beispielsweise rostfreiem Stahl, und/oder unterschiedlichen Beschichtungsmaterialien aufweisen. Dadurch kann beispielsweise ein geeignetes Material und/oder Beschichtungsmaterial für einen bestimmten Standort bestimmt werden. Die Korrosionskontrollstäbchen weisen vorzugsweise eine zumindest im Wesentlichen identische Form zu einem Teilstück des Drahts des zu überwachenden Drahtnetzes, insbesondere eine Stäbchenform, auf. Dadurch kann vorteilhaft eine gute Übertragbarkeit der Testresultate auf das Drahtnetz erreicht werden. Alternativ ist vorstellbar, dass die Korrosionskontrollstäbchen eine von einer Stäbchenform abweichende Form aufweisen, beispielsweise eine Stäbchenform mit zumindest einer Biegung, eine Plättchenform, eine Kugelform, eine Quaderform und/oder einer weiteren von einem Stäbchen verschiedenen geometrischen Form. Der Stäbchenindikator kann vorteilhaft mittels einer Kamera der Korrosionsüberwachungseinheit überwacht werden. Alternativ oder zusätzlich ist vorstellbar, dass der Stäbchenindikator durch einen Benutzer, beispielsweise periodisch, begutachtet und/oder der Korrosionsfortschritt der einzelnen Korrosionskontrollstäbchen, insbesondere manuell, dokumentiert wird. Alternativ oder zusätzlich ist denkbar, dass der Stäbchenindikator mittels einer, insbesondere automatisierten und/oder manuell bedienbaren, Kameradrohne, vorzugsweise periodisch, zur Begutachtung des Korrosionsfortschritts fotografiert wird. Dadurch kann vorteilhaft auf eine Verkabelung, eine Funkverbindung und/oder ein Begehen eines, möglicherweise unwegsamen, Geländes durch einen Bediener verzichtet werden, wodurch vorteilhaft Kosten und/oder Verletzungsgefahren reduziert werden können.

Weiterhin wird vorgeschlagen, dass die Korrosionsüberwachungseinheit zumindest ein Datenübertragungsmodul aufweist, welches insbesondere zumindest dazu vorgesehen ist, zumindest einen ermittelten Korrosionsindikator auszugeben. Dadurch kann vorteilhaft eine hohe Benutzerfreundlichkeit erreicht werden, beispielsweise indem mittels des Datenübertragungsmoduls der Korrosionsindikator vorteilhaft zu einer weiteren elektronischen Verarbeitung und/oder zu einer Begutachtung durch einen Benutzer bereitgestellt werden kann. Es ist denkbar, dass mittels des Datenübertragungsmoduls Daten, insbesondere Korrosionsindikatoren, an zumindest eine Recheneinheit, beispielswiese einen zentralen Server, einen lokalen Hub und/oder eine interne Recheneinheit der Korrosionsüberwachungseinheit, beispielsweise eine Steuer- und/oder Regeleinheit der Korrosionsüberwachungseinheit, übermittelt werden. Diese Recheneinheit ist insbesondere dazu vorgesehen, die Daten, insbesondere die Korrosionsindikatoren, zu verarbeiten, zu analysieren, aufzuzeichnen, zu sammeln und/oder, insbesondere graphisch, darzustellen.

Außerdem wird vorgeschlagen, dass die Korrosionsüberwachungseinheit zumindest ein Datenloggermodul aufweist, welches dazu vorgesehen ist, zumindest eine Ausgabe des Datenübertragungsmoduls aufzuzeichnen. Dadurch kann vorteilhaft ein zeitlicher Verlauf und/oder eine zeitliche Entwicklung eines Korrosionsindikators, insbesondere einer Korrosion ermittelt und/oder überwacht werden. Vorzugsweise speichert das Datenloggermodul den Korrosionsindikator in einer Datenbank einer Speichereinheit ab. Die Speichereinheit kann insbesondere als eine interne Speichereinheit der Korrosionsüberwachungseinheit, beispielsweise der Steuer- und/oder Regeleinheit oder als eine externe Speichereinheit, beispielsweise der Recheneinheit, ausgebildet sein. Vorzugsweise ist ein Datenloggermodul dazu vorgesehen, Daten, insbesondere Korrosionsindikatoren von einer Mehrzahl an Korrosionsüberwachungseinheiten und/oder Überwachungsvorrichtungen aufzuzeichnen. Dadurch kann vorteilhaft eine zentrale Datenbank geschaffen werden, wodurch vorteilhaft eine gute Übersichtlichkeit geschaffen werden kann. Es ist vorstellbar, dass das Datenloggermodul zumindest dazu vorgesehen ist, die aufgezeichneten Daten für eine graphische Darstellung aufbereitet, welche als graphischen Übersicht auf einer Anzeigeeinheit, beispielsweise einem Bildschirm, darstellbar ist. Beispielsweise ist vorstellbar, dass mittels der durch das Datenloggermodul gespeicherten Daten eine von einem Benutzer einsehbare Übersichtskarte erstellt wird, auf der verschiedene Drahtnetze an verschiedenen Standorten mit dem jeweiligen Status, Stärke und/oder Fortschritt der Korrosion dargestellt sind. Drahtnetze, welche nah am Ende einer Lebensdauer und/oder stark korrodiert sind könnten in der Übersichtskarte herausgehoben dargestellt, beispielsweise farblich markiert, sein.

Im Weiteren wird vorgeschlagen, dass die Korrosionsüberwachungseinheit zumindest ein Kommunikationsmodul aufweist, welches zumindest dazu vorgesehen ist, von dem Datenübertragungsmodul ausgegebene Daten, insbesondere Benachrichtigungen bezüglich eines Fortschritts, einer Stärke und/oder eines Status der Korrosion, vorzugsweise Warn- und/oder Statusmeldungen bezüglich eines Fortschritts, einer Stärke und/oder eines Status der Korrosion, vorzugsweise automatisiert, an einen externen Empfänger, beispielsweise ein Smartphone, zu kommunizieren, insbesondere automatisiert mittels einer Telekommunikationsverbindung zu versenden. Dadurch kann vorteilhaft eine Benutzerfreundlichkeit weiter erhöht werden, insbesondere indem ein ortsferner Benutzer jederzeit aktuelle Informationen zur Verfügung gestellt werden. Zudem kann vorteilhaft eine Sicherheit des zu überwachenden Drahtnetzes erreicht werden, insbesondere dadurch, dass eine Korrosionsbeeinträchtigung eines Drahtnetzes rechtzeitig einer verantwortlichen Person kenntlich gemacht werden kann. Mittels einer Warnmeldung kann vorteilhaft eine verantwortliche Person rechtzeitig und ohne großen Aufwand, beispielsweise ohne Studium von Messergebnissen, Informationen über Zustände von Drahtnetzen erhalten. Vorzugsweise weist das Kommunikationsmodul eine Funkkapazität, insbesondere eine Mobilfunkkapazität auf. Insbesondere kommuniziert das Kommunikationsmodul mittels eines Mobilfunkprotokolls, beispielsweise eines EDGE, GPRS, HSCSD und/oder vorzugsweise mittels eines GSM Mobilfunkprotokolls. Vorzugsweise sendet das Kommunikationsmodul neben den von dem Datenübertragungsmodul ausgegebenen Daten weitere Daten, beispielsweise über einen Standort, eine Uhrzeit, einen Batteriestand, einen Funktionsstatus, einen Umgebungsparameter und/oder einen Witterungsparameter. Eine Benachrichtigung kann insbesondere zumindest eine E-mail, zumindest eine SMS, zumindest ein Foto, zumindest eine Videodatei und/oder zumindest eine Internetdatenübertragung, beispielsweise mittels eines Internetprogramms wie einem Newsfeed, WhatsApp und/oder Skype, umfassen. Insbesondere erfolgt ein automatisiertes Versenden periodisch und/oder nach Eintritt eines vorgegebenen Ereignisses, beispielsweise eines Überschreitens und/oder Unterschreitens eines Schwellenwerts. Ein "externer Empfänger" kann insbesondere als zumindest ein Mobiltelefon, insbesondere ein Smartphone, ausgebildet sein. Alternativ oder zusätzlich kann der externe Empfänger als eine Drohne, welche sich in einer Umgebung des Kommunikationsmoduls befindet ausgebildet sein. Eine Warnmeldung kann insbesondere als eine Textnachricht, eine Bildnachricht und/oder als ein Warnsignal wie ein Warnton und/oder eine Warnleuchte ausgebildet sein. Beispielsweise ist vorstellbar, dass eine Drahtnetz-Installation zumindest eine Warnleuchte aufweist, welche bei einem Empfang einer Warnmeldung zu blinken beginnt. Dadurch können vorteilhaft auf einfache Weise korrodierte und/oder unsichere Drahtnetze innerhalb einer Drahtnetz-Installation mit einer Vielzahl an Drahtnetzen erkenntlich gemacht werden.

Zudem wird vorgeschlagen, dass die Korrosionsüberwachungseinheit zumindest ein Korrekturmodul aufweist, welches zumindest dazu vorgesehen ist, potentiell auftretende systematische Fehler bei einer Überwachung der Korrosion, insbesondere bei einer Messung des Korrosionsindikators, zu erkennen und/oder zu korrigieren. Dadurch kann vorteilhaft eine hohe Verlässlichkeit und/oder Genauigkeit erreicht werden. Insbesondere kann dadurch vorteilhaft eine Eignung der Überwachungsvorrichtung an Standorten an denen Einflüsse vorherrschen, welche zu systematischen Fehlern, beispielsweise Drifts eines Messsignals, insbesondere des Korrosionsindikators, führen können erzielt werden. Beispielsweise kann es in einer salzhaltigen Umgebung zu Salzablagerungen auf dem Korrosionsindikator kommen, welche eine Leitfähigkeitsmessung beeinflussen können. Beispielsweise können Temperaturschwankungen einen Einfluss auf einen Messwert eines Strom- und/oder Spannungsverlaufs, insbesondere einen Detektor, beispielsweise einen Strom und/oder Spannungsdetektor haben. Das Korrekturmodul ist insbesondere dazu vorgesehen, systematische Fehler anhand eines zeitlichen Signalverlaufs des Korrosionsindikators und/oder mit Hilfe zusätzlicher Sensordaten, wie beispielsweise Temperaturdaten, zu erkennen.

Des Weiteren wird vorgeschlagen, dass die Korrosionsüberwachungseinheit zumindest eine elektrische Sensoreinheit aufweist, welche dazu vorgesehen ist, den zumindest einen Korrosionsindikator zu überwachen. Dadurch kann vorteilhaft eine Messgröße für eine Korrosion, insbesondere automatisiert, bestimmt werden. Insbesondere ist die elektrische Sensoreinheit vorteilhaft elektrisch, insbesondere automatisiert auslesbar, wodurch eine kontinuierliche Überwachung, insbesondere Fernüberwachung ermöglicht werden kann. Vorteilhaft kann die elektrische Sensoreinheit unabhängig von einem Bediener operieren, wodurch vorteilhaft Kosten, Arbeitsaufwand und Unfallgefahren reduziert werden können. Insbesondere umfasst die elektrische Sensoreinheit eine Kamera, eine Zugeinheit zu einem Ausüben einer mechanischen Spannung auf ein Korrosionselement und/oder ein Korrosionskontrollelement, eine Schwingungseinheit zu einer Erzeugung und/oder Detektion einer Schwingungsfrequenz, insbesondere einer Resonanzschwingungsfrequenz eines Korrosionselements und/oder eines Korrosionskontrollelements, eine Spannungsmesseinheit und/oder eine Widerstandsmesseinheit.

Ferner wird vorgeschlagen, dass die elektrische Sensoreinheit zumindest ein Null-Ohm-Strommessgerät umfasst. Dadurch kann vorteilhaft ein Stromfluss ohne Anlegen einer, möglicherweise korrosionsfordernden, Spannung gemessen werden. Insbesondere ist dadurch ein zwischen zwei Elektroden fließender galvanischer Strom zuverlässig messbar, wodurch vorteilhaft ein zu einem Materialabtrag proportionaler Stromwert eines ACM Sensors ermittelt werden kann. Ein Null-Ohm-Strommessgerät besitzt vorteilhaft einen minimalen, insbesondere für eine Messung meist vernachlässigbaren, Eigenwiderstand.Außerdem wird vorgeschlagen, dass der Korrosionsindikator zumindest eine elektrische Leitfähigkeit eines Korrosionselements, zumindest einen elektrischen Widerstand eines Korrosionselements und/oder zumindest einen Stromfluss zwischen zumindest zwei Elektroden umfasst. Dadurch kann vorteilhaft eine verlässliche Messgröße für eine Korrosion ermittelt werden. Dadurch kann vorteilhaft eine hohe Sicherheit für das zu überwachende Drahtnetz erreicht werden. Insbesondere steigt ein elektrischer Widerstand eines Korrosionselements bei einem Fortschreiten der Korrosion. Insbesondere sinkt ein elektrischer Widerstand bei einem Fortschreiten der Korrosion. Insbesondere ist ein Stromfluss proportional zu einer Materialabtragrate zumindest einer Elektrode, insbesondere des Korrosionselements. Das Korrosionselement ist insbesondere als ein Element ausgebildet, welches dazu vorgesehen ist, zumindest einen Messpunkt, zumindest eine Messfläche und/oder zumindest eine Messstelle für eine Messung des Korrosionsindikators, insbesondere mittels der elektrischen Sensoreinheit, bereitzustellen. Das Korrosionselement kann insbesondere zumindest teilweise zumindest eine Elektrode des ACM Sensors ausbilden. Vorzugsweise bildet das Korrosionselement zumindest teilweise eine Anode, insbesondere des ACM Sensors, aus. Die weitere Elektrode ist insbesondere zumindest teilweise als eine Kathode des ACM Sensors ausgebildet. Die Kathode ist insbesondere zumindest teilweise aus einem unedleren Material ausgebildet als die Anode. Vorzugsweise misst die elektrische Sensoreinheit den Korrosionsindikator immer und/oder ausschließlich an demselben Korrosionselement und/oder an denselben Korrosionselementen. Dadurch kann vorteilhaft eine Überwachung einer zeitlichen Entwicklung des Korrosionsindikators ermöglicht werden. Es ist denkbar, dass das Korrosionselement als ein von dem Drahtnetz separat ausgebildetes Korrosionskontrollelement ausgebildet ist, welches frei von einem elektrischen Kontakt mit dem Drahtnetz ist und/oder als zumindest ein Teil des Drahtnetzes, insbesondere eines Drahts des Drahtnetzes, welcher identisch und/oder verschieden von weiteren Drähten des Drahtnetzes ausgebildet sein kann, ausgebildet ist.

Zudem wird vorgeschlagen, dass der Korrosionsindikator zumindest eine elektrische Leitfähigkeit einer Beschichtung eines Korrosionselements, zumindest einen elektrischen Widerstand einer Beschichtung eines Korrosionselements und/oder zumindest einen Stromfluss zwischen zumindest einer Beschichtung zumindest eines Korrosionselements und zumindest einer weiteren Elektrode umfasst. Dadurch kann vorteilhaft eine verlässliche Messgröße für eine Korrosion ermittelt werden, welche insbesondere direkt mit der Korrosion des Drahtnetzes, insbesondere der Korrosion der Korrosionsschutzschicht des Drahtnetzes, in Beziehung gebracht werden kann. Dadurch kann vorteilhaft eine hohe Sicherheit für das zu überwachende Drahtnetz erreicht werden.

Erfindungsgemäß ist die Beschichtung der die Anode ausbildenden Elektrode als eine Zinkbeschichtung, als eine Zink-Aluminiumbeschichtung und/oder als eine Zink-Aluminium-Magnesiumbeschichtung ausgebildet, welche im Wesentlichen identisch zu einer Beschichtung zumindest eines Teils des Drahtnetzes ausgebildet ist.

Vorzugsweise weist die Beschichtung des Korrosionselements, insbesondere des Korrosionskontrollelements, eine zumindest im Wesentlichen identische Schichtdicke auf, wie zumindest ein Teil der Beschichtung zumindest eines Teils des Drahtnetzes, insbesondere zumindest eines Teils des Drahts des Drahtnetzes. Alternativ ist vorstellbar, dass das Korrosionskontrollelement als ein Vorauseilindikator ausgebildet ist. Bei dem Vorauseilindikator ist insbesondere die Schichtdicke der Beschichtung des Korrosionskontrollelements wesentlich kleiner ist als die Schichtdicke der Beschichtung des Drahts. Unter "wesentlich kleiner" soll insbesondere zumindest 10 % kleiner, vorzugsweise zumindest 25 % kleiner, bevorzugt zumindest 33 % kleiner oder besonders bevorzugt zumindest 50 % kleiner verstanden werden. Dadurch kann vorteilhaft eine Korrosion des Korrosionskontrollelements vor einer Korrosion des Drahts des Drahtnetzes erkennbar werden, wodurch vorteilhaft eine Früherkennung einer Korrosion ermöglicht werden kann. Vorzugsweise weist die Beschichtung des Korrosionselements, insbesondere des Korrosionskontrollelements, eine zumindest im Wesentlichen identische Materialbeschaffenheit auf, wie zumindest ein Teil der Beschichtung zumindest eines Teils des Drahtnetzes, insbesondere zumindest eines Teils des Drahts des Drahtnetzes. Vorzugsweise weist die Beschichtung des Korrosionselements, insbesondere des Korrosionskontrollelements, eine zumindest im Wesentlichen identische Oberflächenkrümmung auf wie zumindest ein Teil der Beschichtung zumindest eines Teils des Drahtnetzes, insbesondere zumindest eines Teils des Drahts des Drahtnetzes. Vorzugsweise weist die Beschichtung des Korrosionselements, insbesondere des Korrosionskontrollelements, eine zumindest im Wesentlichen identische Oberflächenbeschaffenheit auf, wie zumindest ein Teil der Beschichtung zumindest eines Teils des Drahtnetzes, insbesondere zumindest eines Teils des Drahts des Drahtnetzes.

Weiterhin wird vorgeschlagen, dass eine Beschichtung eines Korrosionselements, und erfindungsgemäß eines Korrosionskontrollelements, zumindest im Wesentlichen identisch zu einer Korrosionsschutzbeschichtung zumindest eines Drahts eines zu überwachenden Drahtnetzes ausgebildet ist. Dadurch kann vorteilhaft eine verlässliche Messgröße für eine Korrosion ermittelt werden, welche insbesondere direkt mit der Korrosion des Drahtnetzes, insbesondere der Korrosion der Korrosionsschutzschicht des Drahtnetzes, in Beziehung gebracht werden kann. Dadurch kann vorteilhaft eine hohe Sicherheit für das zu überwachende Drahtnetz erreicht werden. Zudem kann vorteilhaft eine bessere Übertragbarkeit der Messergebnisse von dem Korrosionselement auf das Drahtnetz ermöglicht werden.

Wenn die Überwachungsvorrichtung zumindest einen elektrischen Isolator, insbesondere zumindest zu einer zumindest teilweisen räumlichen Begrenzung eines Stromflusses durch, insbesondere in, zumindest einem Korrosionselement, aufweist, kann vorteilhaft eine Messung des Korrosionsindikators, insbesondere eine Genauigkeit der Messung des Korrosionsindikators optimiert werden, insbesondere indem ein Stromfluss auf der Korrosion am meisten unterworfene Bereiche des Korrosionsindikators, beispielsweise Oberflächenbereiche des Korrosionsindikators, begrenzbar ist. Dadurch kann vorteilhaft eine hohe Sicherheit für das zu überwachende Drahtnetz erreicht werden. Der elektrische Isolator kann insbesondere als zumindest ein isolierender Kern im Inneren des Korrosionselements, insbesondere des Korrosionskontrollelements, ausgebildet sein. Alternativ könnte der Isolator als zumindest eine isolierende Zwischenschicht des Korrosionselements, insbesondere des Korrosionskontrollelements, ausgebildet sein. Die isolierende Zwischenschicht könnte insbesondere einen inneren, beispielsweise aus hochfestem Stahl bestehenden, Draht von einer Beschichtung, insbesondere elektrisch, trennen. Vorzugsweise begrenzt der Isolator einen, insbesondere zu einer Ermittlung des Korrosionsindikators bestimmten und/oder genutzten, Stromfluss. Bevorzugt begrenzt der Isolator den Stromfluss auf einen Teil eines Korrosionselements, insbesondere Korrosionskontrollelements, welcher einer Korrosion besonders ausgesetzt ist, beispielsweise einen äußeren Teil und/oder eine, insbesondere äußere, Beschichtung. Insbesondere erfolgt die räumliche Begrenzung in eine Radialrichtung eines Korrosionselements, insbesondere Korrosionskontrollelements. Insbesondere ist der Isolator verschieden von einer äußeren isolierenden Beschichtung, beispielsweise einer organischen Beschichtung eines Drahts. Insbesondere ist der Isolator verschieden von einem Korrosionselement und/oder einen Draht in Längsrichtung abschließenden isolierenden Endkappen. Vorzugsweise weist die Beschichtung eine gute Haltekraft auf dem Isolator auf, welche zumindest 80 %, vorzugsweise zumindest 90 %, vorteilhaft zumindest 100 %, bevorzugt zumindest 120 % und besonders bevorzugt zumindest 150 % der Haltekraft der Beschichtung auf, insbesondere hochfestem, Stahl beträgt. In einer bevorzugten Ausführung ist der Isolator dazu vorgesehen das Korrosionselement, insbesondere das Korrosionskontrollelement, welches insbesondere eine Anode des ACM Sensors ausbildet, von zumindest einer, insbesondere als Kathode ausgebildeten, Elektrode des ACM Sensors elektrisch zu isolieren. Der elektrische Isolator ist dabei zumindest teilweise als ein die Elektroden trennender Luftspalt ausgebildet. Vorzugsweise ist ein kleinster durch den Luftspalt zwischen zwei Elektroden, insbesondere zwischen einer Kathode und einer Anode des ACM Sensors, ausgebildeter Abstand zumindest kleiner als 0,2 mm, vorzugsweise zumindest kleiner als 0,15 mm, bevorzugt zumindest kleiner als 0,1 mm und besonders bevorzugt zumindest größer als 0,05 mm. In einem trockenen Zustand sind daher Kathode und Anode vorteilhaft elektrisch isoliert und im Wesentlichen frei von einem Materialabtrag. In einem nassen Zustand sind Kathode und Anode insbesondere elektrisch in Kontakt, wobei ein, insbesondere zu einem Materialabtrag führender, Stromfluss von einer Zusammensetzung des Elektrolyts abhängig ist.

Ferner wird vorgeschlagen, dass der elektrische Isolator zumindest teilweise in einem Inneren des Korrosionselements angeordnet ist. Dadurch kann vorteilhaft eine Begrenzung des Stromflusses auf eine außenliegende Schicht und/oder Beschichtung des Korrosionselements, insbesondere Korrosionskontrollelements erreicht werden. Vorzugsweise ist der elektrische Isolator in seinem gesamten Umfang von zumindest einem leitfähigen, insbesondere metallischen, Teil des Korrosionselements, insbesondere Korrosionskontrollelements umgeben.

Außerdem wird vorgeschlagen, dass das Korrosionskontrollelement in einem Ausgangszustand, einen Außenquerschnitt aufweist, welcher zumindest im Wesentlichen identisch zu einem Außenquerschnitt eines Drahts eines zu überwachenden Drahtnetzes in einem Auslieferungszustand des Drahtnetzes ist. Dadurch kann vorteilhaft eine verlässliche Messgröße für eine Korrosion ermittelt werden, welche insbesondere direkt mit der Korrosion des Drahtnetzes, insbesondere der Korrosion der Korrosionsschutzschicht des Drahtnetzes, in Beziehung gebracht werden kann. Dadurch kann vorteilhaft eine hohe Sicherheit für das zu überwachende Drahtnetz erreicht werden. Insbesondere können dadurch vorteilhaft zumindest im Wesentlichen identische Einflüsse einer Oberflächenkrümmung und/oder Oberflächenspannung auf eine Korrosion des Korrosionskontrollelements und den Draht des Drahtnetzes ermöglicht werden. Dadurch kann vorteilhaft eine bessere Übertragbarkeit der Messergebnisse von dem Korrosionskontrollelement auf das Drahtnetz ermöglicht werden. Unter einem "Ausgangszustand" und/oder einem "Auslieferungszustand" soll insbesondere ein unkorrodierter Zustand verstanden werden. Unter einem "Außenquerschnitt" soll insbesondere eine Kontur eines Querschnitts einer äußersten, das Korrosionskontrollelement und/oder den Draht in Radialrichtung begrenzenden Schicht verstanden werden, wobei der Querschnitt insbesondere senkrecht zu einer Längsrichtung des Korrosionskontrollelements und/oder des Drahts ist.

Ferner wird vorgeschlagen, dass die Korrosionsüberwachungseinheit zumindest ein weiteres Korrosionskontrollelement, vorzugsweise zumindest zwei weitere Korrosionskontrollelemente und bevorzugt zumindest eine Mehrzahl an weiteren Korrosionskontrollelementen, aufweist, wobei insbesondere das/die weitere/n Korrosionskontrollelement/e zumindest im Wesentlichen identisch zu dem Korrosionskontrollelement ausgebildet sind. Dadurch kann vorteilhaft eine Redundanz erhöht werden, wodurch insbesondere eine Haltbarkeit und/oder Lebensdauer der Überwachungsvorrichtung erhöht werden kann. Zudem kann vorteilhaft eine Genauigkeit und/oder Zuverlässigkeit, insbesondere einer Messung, des Korrosionsindikators erreicht werden, insbesondere indem Messwerte verschiedener Korrosionsindikatoren verglichen werden können. Durch einen Vergleich, insbesondere der Korrosionsindikatoren zumindest dreier Korrosionselemente, können vorteilhaft fehlerhafte Messwerte aussortiert werden und Abweichungen herausgemittelt werden.

Des Weiteren wird vorgeschlagen, dass das zumindest eine weitere Korrosionskontrollelement eine räumliche Orientierung aufweist, die wesentlich verschieden von einer räumlichen Orientierung des Korrosionskontrollelements, vorzugsweise zumindest im Wesentlichen senkrecht zu der räumlichen Orientierung des Korrosionskontrollelements, ist. Dadurch kann vorteilhaft eine möglichst vollständige und/oder präzise Überwachung des Drahtnetzes ermöglich werden, insbesondere indem die Überwachung möglichst orientierungsunabhängig ist. Zudem kann vorteilhaft ein Einfluss einer Orientierung der Überwachungsvorrichtung bei der Montage reduziert werden. Dadurch kann vorteilhaft eine hohe Sicherheit für das zu überwachende Drahtnetz erreicht werden. Es ist denkbar, dass die räumlichen Orientierungen der Korrosionskontrollelemente den vorherrschenden räumlichen Orientierungen der Netzelemente eines zu überwachenden Drahtnetzes entsprechen, beispielsweise könnten bei einem Drahtnetz mit rautenförmigen Maschen die Korrosionskontrollelemente parallel zu den Seiten der Rauten ausgerichtet sein und/oder bei einem Drahtnetz mit Wendel könnten die Korrosionskontrollelemente parallel zu Schenkeln der Wendel ausgerichtet sein. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Außerdem wird vorgeschlagen, dass zumindest die Korrosionsüberwachungseinheit, insbesondere zumindest die Sensoreinheit, das Datenübertragungsmodul, das Datenloggermodul, das Kommunikationsmodul und/oder das Korrekturmodul, zumindest teilweise gepulst betreibbar ist. Dadurch kann vorteilhaft eine energiesparende Funktionsweise erzielt werden, wodurch vorteilhaft eine in einer Energiequelle der Überwachungsvorrichtung gespeicherte Energie effizient genutzt werden kann und/oder ein langer Betrieb bis zu einem Austausch und/oder Aufladen der Energiequelle ermöglicht werden kann. Dadurch kann vorteilhaft eine möglichst störungsfreier und/oder unterbrechungsfreier Betrieb der Überwachungsvorrichtung erreicht werden. Zudem können insbesondere in einem Vergleich zu einem Dauerbetrieb elektronische Bauteile und/oder Bauteile die zu einem Stromfluss vorgesehen, sind geschont werden. Vorzugsweise erfolgt ein gepulster Betrieb in periodischen Abständen, beispielsweise mit jeweils einem elektrischen Puls in einem im Abstand von einigen Minuten, Stunden, Tagen und/oder Wochen. Die Energiequelle kann insbesondere zumindest eine, vorzugsweise austauschbare, Batterie und/oder bevorzugt zumindest einen wiederaufladbaren Akkumulator aufweisen. Insbesondere ist die Steuer- und/oder Regeleinheit dazu vorgesehen, zumindest die Korrosionsüberwachungseinheit, insbesondere zumindest die Sensoreinheit, das Datenübertragungsmodul, das Datenloggermodul, das Kommunikationsmodul und/oder das Korrekturmodul gepulst zu betreiben. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden.

Vorteilhaft weist die Überwachungsvorrichtung zumindest eine Photovoltaikeinheit auf. Dadurch kann vorteilhaft eine autarke Energieversorgung ermöglicht werden. Vorzugsweise ist die Photovoltaikeinheit dazu vorgesehen, den wiederaufladbaren Akkumulator aufzuladen. Insbesondere weist die Photovoltaikeinheit zumindest ein Solarpanel mit zumindest einer Solarzelle zu einer Spannungserzeugung mittels absorbierten Sonnenlicht auf. Vorteilhaft weist die Überwachungsvorrichtung neben dem durch die Photovoltaikeinheit aufladbaren Akkumulator eine weitere Energiequelle, beispielsweise eine Batterie, auf, welche zur Energieversorgung während Zeiten an denen der Akkumulator entladen ist dient, beispielsweise in dem Fall, dass das Solarpanel zumindest teilweise bedeckt ist, beispielsweise durch Schnee, und keinen oder zu wenig Strom erzeugen kann.

Außerdem wird vorgeschlagen, dass die Korrosionsüberwachungseinheit dazu vorgesehen ist, zumindest einen, von dem Korrosionsindikator verschiedenen weiteren Korrosionsindikator zu überwachen. Dadurch kann vorteilhaft eine Verlässlichkeit und/oder Genauigkeit der Überwachungsvorrichtung, insbesondere der Bestimmung der Korrosion durch die Überwachungsvorrichtung weiter erhöht werden, wodurch vorteilhaft eine hohe Sicherheit für das zu überwachende Drahtnetz erreicht werden kann. Vorteilhaft kann dadurch eine Funktionsfähigkeit der Überwachungsvorrichtung überwacht werden, beispielsweise indem bei einer Divergenz zweier überwachter Korrosionsindikatoren eine automatische Warnmeldung an einen Bediener übermittelt wird. Der weitere Korrosionsindikator umfasst insbesondere zumindest eine durch eine Korrosion beeinflussbare Eigenschaft, insbesondere Materialeigenschaft und/oder Materialbeschaffenheit, insbesondere zumindest eines Teils des Drahtnetzes und/oder zumindest eines Teils eines von dem Drahtnetz separat ausgebildeten Elements, welches indikativ für eine Korrosion des Drahtnetzes ist und/oder vorzugsweise zumindest im Wesentlichen identischen Umgebungs- und/oder Witterungsbedingungen ausgesetzt ist wie das Drahtnetz. Vorzugsweise ist mittels des Korrosionsindikators ein Status, eine Stärke und/oder ein Fortschritt einer Korrosion, insbesondere zumindest eines Teils des Drahtnetzes, bestimmbar. Der Korrosionsindikator umfasst insbesondere zumindest eine Oberflächenfärbung, zumindest eine Oberflächenbeschaffenheit, zumindest einen Gewichtsverlust, zumindest eine Reißfestigkeit, zumindest eine Schwingfrequenz, insbesondere Resonanzschwingfrequenz, eine elektrische Leitfähigkeit, einen ohmschen Widerstand zumindest eines Teils des Drahts des Drahtnetzes und/oder zumindest eines Teils des von dem Drahtnetz separat ausgebildeten Elements, einen Stromfluss zwischen zwei Elektroden des ACM Sensors und/oder vorzugsweise zumindest eine Oberflächenfärbung des Korrosionselements. Die Korrosionsüberwachungseinheit ist insbesondere dazu vorgesehen, den Korrosionsindikator zu registrieren und/oder vorzugsweise zu sensieren und insbesondere einem Benutzer zugänglich zu machen und/oder automatisch mit einer Datenbank abzugleichen zu einer Abschätzung eines Zustands, einer Funktionstüchtigkeit und/oder einer Sicherheit des Drahtnetzes. Beispielsweise ist denkbar, dass der weitere Korrosionsindikator eine Färbung des Drahts des zu überwachenden Drahtnetzes ist, welche mittels eines durch einer Kamera der Überwachungsvorrichtung aufgenommenen Fotos bestimmbar ist, welches regelmäßig, beispielswiese wöchentlich, aufgenommen und an eine mit der Überwachung betraute Person versendet wird und/oder an eine zumindest eine Korrosionsüberwachungseinheit, vorzugsweise zumindest eine Mehrzahl an Kommunikationsüberwachungseinheiten, anfliegende Datensammeldrohne bei Kontaktaufnahme versendet wird.

Weiterhin wird vorgeschlagen, dass die Korrosionsüberwachungseinheit zumindest eine Umgebungssensoreinheit aufweist, welche dazu vorgesehen ist, zumindest einen Umgebungs- und/oder Witterungsparameter zu überwachen. Dadurch kann vorteilhaft eine Korrosion, insbesondere ein Korrosionsfortschritt, mit Umgebungs- und/oder Witterungsbedingungen in Beziehung gebracht werden, wodurch beispielsweise eine standortabhängige Prognose für eine Korrosion erstellt werden kann. Zudem kann vorteilhaft mittels der gesammelten Daten eine zukünftige Anpassung eines Drahtnetzes und/oder eines Korrosionsschutzes eines Drahtnetzes an bestimmte zu erwartende Bedingungen an einem Standort ermöglicht werden. Die Umgebungssensoreinheit umfasst insbesondere zumindest eine Wetterstation, zumindest einen Gassensor, zumindest einen Partikelsensor und/oder zumindest einen Strahlungssensor. Unter einem "Umgebungs- und/oder Witterungsparameter" soll insbesondere zumindest eine Lufttemperatur, zumindest eine Luftfeuchtigkeit, zumindest eine Windrichtung, zumindest eine Windgeschwindigkeit, zumindest eine Niederschlagsmenge, zumindest eine Sonneneinstrahlintensität, zumindest eine Feinstaubkonzentration und/oder zumindest eine Konzentration zumindest eines atmosphärischen Gases, beispielsweise Os, SOₓ und/oder NOₓ verstanden werden. Vorzugsweise ist das Datenloggermodul zumindest dazu vorgesehen, gemessene Umgebungs- und/oder Witterungsparameter in einer Zeitreihe aufzuzeichnen. Vorzugsweise ist das Datenübertragungsmodul zumindest dazu vorgesehen, ermittelte Umgebungs- und/oder Witterungsparameter auszugeben. Vorzugsweise ist das Kommunikationsmodul zumindest dazu vorgesehen, Umgebungs- und/oder Witterungsparameter an einen externen Empfänger, insbesondere automatisiert und/oder periodisch, zu kommunizieren.

Zudem wird vorgeschlagen, dass die Korrosionsüberwachungseinheit zumindest eine Einschlagssensoreinheit aufweist, welche dazu vorgesehen ist, Einschläge dynamischer Einschlagskörper in ein zu überwachendes Drahtnetz zu sensieren. Dadurch kann vorteilhaft eine Abschätzung einer Haltbarkeit des Drahtnetzes verbessert werden, insbesondere da bereits durch Einschläge vorbelastete Drahtnetze auch bei niedrigerer Korrosion bereits einen möglicherweise beeinträchtigten Schutz bieten. Beispielsweise kann eine Korrosionsschutzbeschichtung bei einem Einschlag eines dynamischen Einschlagkörpers lokal beschädigt werden, wodurch lokal eine Korrosion schneller fortschreitet als an einer durch die Überwachungseinheit überwachten Stelle. Mittels der Einschlagssensoreinheit kann somit vorteilhaft eine hohe Sicherheit für das zu überwachende Drahtnetz erreicht werden. Vorzugsweise umfasst die Einschlagssensoreinheit zumindest einen Beschleunigungssensor, welcher dazu vorgesehen ist, zumindest eine Kenngröße für eine an dem Drahtnetz, insbesondere an einer Seil- und/oder Netzkonstruktion mit dem Drahtnetz, bei einem Einschlag eines Einschlagskörpers in das Drahtnetz auftretende Beschleunigung zu erfassen. Vorzugsweise ist der Beschleunigungssensor zumindest dazu vorgesehen, Beschleunigungen zumindest bis 100 g, vorzugsweise zumindest bis 150 g und bevorzugt zumindest bis 200 g, zu messen, wobei 1 g einem Wert von 9,81 m/s² entspricht. Vorzugsweise ist eine Funktion des Beschleunigungssensors unabhängig von außerhalb einer Gehäuseeinheit der Überwachungsvorrichtung verlaufenden Kabeln und/oder Seilen. Vorzugsweise überwacht der Beschleunigungssensor an Tragseilen der Seil- und/oder Netzkonstruktion mit dem Drahtnetz auftretende Beschleunigungen. Vorzugsweise ist das Datenloggermodul zumindest dazu vorgesehen, gemessene Beschleunigungen in einer Zeitreihe aufzuzeichnen. Vorzugsweise ist das Datenübertragungsmodul zumindest dazu vorgesehen, ermittelte Beschleunigungen auszugeben. Vorzugsweise ist das Kommunikationsmodul zumindest dazu vorgesehen, Beschleunigungsdaten an einen externen Empfänger zu, insbesondere automatisiert, kommunizieren. Insbesondere weist der Beschleunigungssensor eine Aktivierungsfunktion auf, welche den Beschleunigungssensor automatisiert, insbesondere bei einem Auftreten eines Beschleunigungswerts oberhalb eines eine Aktivierungsschwelle ausbildenden Beschleunigungswerts, aus einem Ruhezustand in einen aktiven Zustand versetzt.

Des Weiteren wird ein Überwachungssystem mit einer Mehrzahl an Überwachungsvorrichtungen vorgeschlagen. Dadurch kann vorteilhaft eine hohe Sicherheit für das zu überwachende Drahtnetz erreicht werden. Die Mehrzahl an Überwachungseinrichtungen kann insbesondere zumindest teilweise an einem einzelnen und/oder zusammenhängenden Drahtnetz und/oder vorzugsweise zumindest teilweise an verschiedenen, insbesondere räumlich benachbarten, Drahtnetzen angeordnet sein. Zudem ist vorstellbar, dass das Überwachungssystem eine Mehrzahl von Überwachungsvorrichtungen umfasst, welche zumindest teilweise an unterschiedlichen Standorten verteilten Drahtnetzen zugeordnet sind. Dadurch kann vorteilhaft eine Gesamtübersicht über Drahtnetze eines Betreibers ermöglicht werden.

Wenn die Überwachungsvorrichtungen, insbesondere mittels eines Kommunikationsmoduls einer Korrosionsüberwachungseinheit, vernetzt sind kann vorteilhaft eine Gesamtübersicht über Drahtnetze eines Betreibers ermöglicht werden. Dadurch kann vorteilhaft eine Übersichtlichkeit und/oder eine Effizienz erhöht werden. Insbesondere sind die Überwachungsvorrichtungen untereinander vernetzt und/oder über einen lokalen und/oder zentralen Hub miteinander verbunden. Der lokale Hub ist insbesondere in einer räumlichen Nähe zu den vernetzten Überwachungsvorrichtungen angeordnet und bildet einen lokalen Knotenpunkt. Unter einer "räumlichen Nähe" soll insbesondere eine Entfernung von höchstens einigen Kilometern, bevorzugt von höchstens einigen hundert Metern verstanden werden. Der zentrale Hub ist insbesondere als ein räumlich entfernter, beispielsweise ein Netzwerk- und/oder Internetserver, ausgebildet, welcher insbesondere weltweit verordnet sein kann.

Ferner wird ein System zur Korrosionsüberwachung eines Drahtnetzes mit zumindest einer Überwachungsvorrichtung und mit zumindest einem Drahtnetz, insbesondere Schutznetz zu einem Stabilisieren, Auf- und/oder Abfangen und/oder Zurückhalten von schweren Lasten, vorzugsweise mit einem Überwachungssystem, vorgeschlagen. Dadurch können insbesondere vorteilhafte Eigenschaften, insbesondere des Drahtnetzes, hinsichtlich einer Sicherheit bereitgestellt werden. Vorteilhaft kann eine Schutzwirkung und/oder eine Beständigkeit eines Drahtnetzes, insbesondere einer Drahtnetz-Installation, überwacht werden, wodurch insbesondere Fehlfunktionen vermieden werden können.

Zudem wird vorgeschlagen, dass das Drahtnetz zumindest ein Indikatorelement aufweist, welches ein direkt zu überwachendes Korrosionselement zumindest teilweise ausbildet. Dadurch kann vorteilhaft eine direkte Überwachungsmöglichkeit des Drahtnetzes unabhängig von einem Korrosionskontrollelement erreicht werden, wodurch vorteilhaft eine Komplexität verringert werden kann. Insbesondere ist das Indikatorelement einstückig mit zumindest einem Netzelement des Drahtnetzes ausgebildet. Unter einem "direkt zu überwachendem Korrosionselement" soll insbesondere ein zu überwachendes Korrosionselement, welches zu einer Korrosionsüberwachung in einem berührenden Kontakt mit einer Kontaktierungseinheit der Korrosionsüberwachungseinheit steht, verstanden werden. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Vorteilhaft soll unter einstückig auch einteilig verstanden werden. Das Korrosionselement könnte vorzugsweise zumindest teilweise ein Drahtnetz ausbildet und insbesondere zu einem Stabilisieren, insbesondere von statischen Bauwerken und/oder zu einem Auf- und/oder Abfangen und/oder Zurückhalten von schweren Lasten vorgesehen sein. Es ist vorstellbar, dass das Korrosionselement eine, beispielsweise farbliche, Markierung aufweist, welche insbesondere als ein Erkennungsmerkmal für einen Monteur fungiert. Der Monteur erkennt dann vorteilhaft auf einfache Weise einen vorgesehenen Montageort für die Überwachungsvorrichtung an dem Drahtnetz.

Weiterhin wird vorgeschlagen, dass das Indikatorelement als ein in das Drahtnetz eingeflochtenes Netzelement ausgebildet ist. Dadurch kann vorteilhaft eine direkte Überwachungsmöglichkeit des Drahtnetzes unabhängig von einem Korrosionskontrollelement erreicht werden, wodurch vorteilhaft eine Komplexität verringert werden kann.

Des Weiteren wird ein Verfahren zur Überwachung einer Korrosion eines Drahtnetzes, insbesondere eines Schutznetzes zu einem Stabilisieren, Auf- und/oder Abfangen und/oder Zurückhalten von schweren Lasten, insbesondere mittels einer Überwachungsvorrichtung, mit zumindest zwei ineinandergreifenden Netzelementen, von denen wenigstens ein Netzelement aus zumindest einem Einzeldraht, einem Drahtbündel, einer Drahtlitze, einem Drahtseil und/oder einem anderen Längselement mit zumindest einem, insbesondere aus einem hochfesten Stahl gefertigten, Draht gefertigt ist, vorgeschlagen, wobei zumindest ein Korrosionsindikator überwacht wird. Dadurch können insbesondere vorteilhafte Eigenschaften, insbesondere des Drahtnetzes, hinsichtlich einer Sicherheit bereitgestellt werden. Vorteilhaft kann eine Schutzwirkung und/oder eine Beständigkeit eines Drahtnetzes, insbesondere einer Drahtnetz-Installation, überwacht werden, wodurch insbesondere Fehlfunktionen vermieden werden können.

Außerdem wird vorgeschlagen, dass zumindest eine Stärke einer Korrosion mittels eines Stromwerts eines Stromflusses bestimmt wird. Dadurch kann vorteilhaft eine verlässliche, insbesondere zu einer Materialabtragrate proportionale, Messgröße für eine Korrosion ermittelt werden. Dadurch kann vorteilhaft eine hohe Sicherheit für das zu überwachende Drahtnetz erreicht werden.

Zusätzlich wird vorgeschlagen, dass zumindest ein Fortschritt einer Korrosion mittels einer Änderung, insbesondere eines Anstiegs, eines elektrischen Widerstands und/oder einer Änderung, insbesondere eines Abfalls, einer elektrischen Leitfähigkeit bestimmt wird. Dadurch kann vorteilhaft eine verlässliche Messgröße für eine Korrosion ermittelt werden. Dadurch kann vorteilhaft eine hohe Sicherheit für das zu überwachende Drahtnetz erreicht werden.Ferner wird vorgeschlagen, dass bei einem Überschreiten, Unterschreiten und/oder Erreichen eines Schwellenwerts des, insbesondere als elektrischer Widerstand, als elektrische Leitfähigkeit, als Stromfluss ausgebildeten, Korrosionsindikators eine automatische Benachrichtigung, insbesondere automatische Warnmeldung, ausgelöst wird, insbesondere mittels eines Benachrichtigungsmoduls versandt wird. Dadurch kann vorteilhaft eine Benutzerfreundlichkeit weiter erhöht werden, insbesondere indem ein ortsferner Benutzer jederzeit aktuelle Informationen zur Verfügung gestellt werden. Zudem kann vorteilhaft eine Sicherheit des zu überwachenden Drahtnetzes erreicht werden, insbesondere dadurch, dass eine Korrosionsbeeinträchtigung eines Drahtnetzes rechtzeitig einer verantwortlichen Person kenntlich gemacht werden kann. Ein "Schwellenwert" ist insbesondere als eine minimal akzeptable Leitfähigkeit, als ein maximal akzeptabler elektrischer Widerstand, als eine maximale Änderung der Leitfähigkeit und/oder des elektrischen Widerstands und/oder als ein Ausbleiben eines Stromflusses, insbesondere trotz feuchter Umgebungsbedingungen und/oder als eine Zeitdauer eines Ausbleibens eines Stromflusses ausgebildet.

Die erfindungsgemäße Überwachungsvorrichtung und/oder das erfindungsgemäße Verfahren soll/sollen hierbei nicht auf die oben beschriebene Anwendung und Ausführungsform beschränkt sein. Insbesondere kann die erfindungsgemäße Überwachungsvorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist sind zwei Ausführungsbeispiele der Erfindung dargestellt.

Es zeigen:
- Fig. 1: ein System zur Korrosionsüberwachung mit einem Drahtnetz und einer Überwachungsvorrichtung,
- Fig. 2: einen Querschnitt eines Drahts des Drahtnetzes,
- Fig. 3: eine Korrosionsüberwachungseinheit der Überwachungsvorrichtung mit Korrosionskontrollelementen,
- Fig. 4: a) einen Querschnitt des Korrosionskontrollelements, b) eine Seitenansicht des Korrosionskontrollelements,
- Fig. 5: a) einen Querschnitt eines alternativen Korrosionskontrollelements, b) eine Seitenansicht des alternativen Korrosionskontrollelements,
- Fig. 6: ein Strom-Zeit-Diagramm,
- Fig. 7: ein Ablaufdiagramm für ein Verfahren,
- Fig. 8: eine alternative Korrosionsüberwachungseinheit mit weiteren alternativen Korrosionskontrollelementen,
- Fig. 9: ein Widerstands-Zeit-Diagramm,
- Fig. 10: ein Leitfähigkeits-Zeit-Diagramm,
- Fig. 11: die alternative Korrosionsüberwachungseinheit mit einem zweiten weiteren alternativen Korrosionskontrollelement,
- Fig. 12: die alternative Korrosionsüberwachungseinheit mit einem dritten weiteren alternativen Korrosionskontrollelement,
- Fig. 13: einen Querschnitt eines Korrosionselements,
- Fig. 14: einen Querschnitt eines alternativen Korrosionselements,
- Fig. 15: ein viertes weiters alternatives Korrosionskontrollelement und
- Fig. 16: ein alternatives System zur Korrosionsüberwachung mit einem Drahtnetz und einer Überwachungsvorrichtung.

### Beschreibung der Ausführungsbeispiele

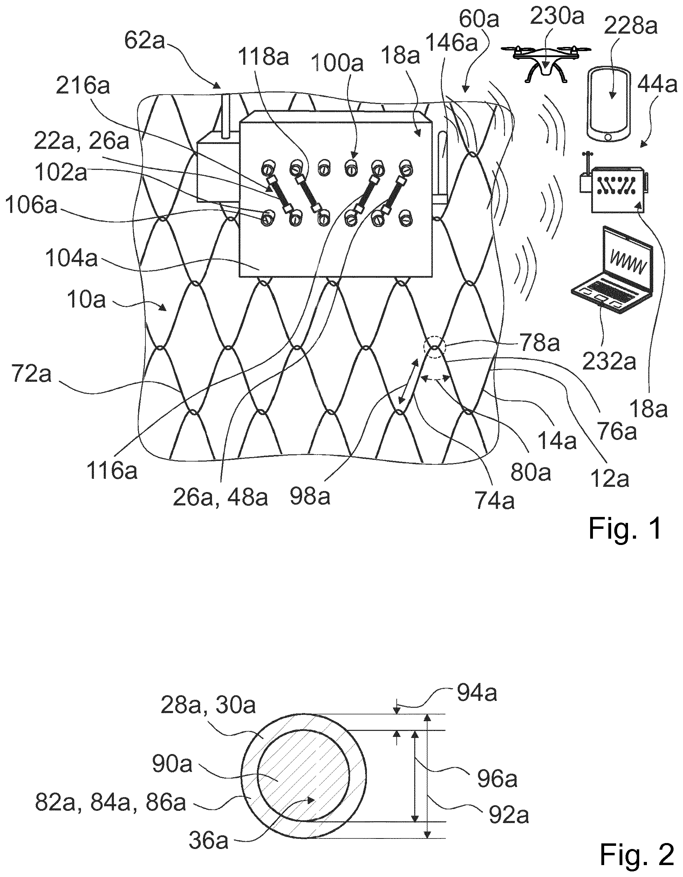

Fig. 1 zeigt ein System 62a zur Korrosionsüberwachung eines Drahtnetzes 10a. Das System 62a weist eine Überwachungsvorrichtung auf. Das System 62a weist ein Drahtnetz 10a auf. Das Drahtnetz 10a ist als ein Schutznetz zu einem Auf- und/oder Abfangen von schweren Lasten ausgebildet. Alternativ oder zusätzlich kann das Drahtnetz 10a als ein Schutznetz zu einem Zurückhalten schwerer Lasten ausgebildet sein, beispielsweise einer Böschungssicherung. Alternativ oder zusätzlich kann das Darhtnetz 10a als ein Schutznetz zu einem Stabilisieren, insbesondere von statischen Bauwerken und/oder schweren Lasten ausgebildet sein. Das Drahtnetz 10a ist aus ineinandergreifenden Netzelementen 12a ausgebildet. Das Netzelement 12a ist aus einem Draht 14a gefertigt. Der Draht 14a ist aus einem hochfesten Stahl 16a gefertigt. Alternativ kann das Netzelement 12a als ein Drahtbündel, als eine Drahtlitze, als ein Drahtseil und/oder als ein anderes Längselement mit dem Draht 14a gefertigt sein. Das Netzelement 12a ist als eine Wendel 72a ausgebildet. Die Wendel 72a weisen zwei alternierend angeordnete Schenkel 74a, 76a auf. Die Schenkel 74a, 76a sind an einer Biegestelle 78a miteinander verbunden. Die Schenkel 74a, 76a spannen an der Biegestelle 78a einen Winkel 80a auf. Alternativ kann das Netzelement 12a in sich geschlossen, beispielsweise ringförmig, ausgebildet sein.

Das Netzelement 12a weist einen Korrosionsschutz 82a auf. Der Korrosionsschutz 82a ist als eine Beschichtung 28a des Netzelements 12a ausgebildet. Der Korrosionsschutz 82a ist als eine Korrosionsschutzbeschichtung 30a ausgebildet (vgl. Fig. 2). Die Korrosionsschutzbeschichtung 30a ist als eine metallische Beschichtung 84a des Drahts 14a ausgebildet. Die metallische Beschichtung 84a ist als eine Zinkbeschichtung 86a ausgebildet. Alternativ kann die metallische Beschichtung 84a als eine Zink-Aluminiumbeschichtung ausgebildet sein. Der Draht 14a weist einen Drahtkern 90a auf. Die Korrosionsschutzbeschichtung 30a ist auf dem Drahtkern 90a haftend aufgebracht. Der Drahtkern 90a ist aus einem hochfesten Stahl 16a ausgebildet. Der Drahtkern 90a weist einen Durchmesser 96a auf. Der Draht 14a weist einen Außenquerschnitt 36a auf. Der Außenquerschnitt 36a ist als ein Querschnitt des Drahts 14a senkrecht zu einer Längserstreckungsrichtung 98a des Drahts 14a, insbesondere eines Schenkels 74a, 76a, ausgebildet. Der Draht 14a weist einen Gesamtdurchmesser 92a auf. Der Außenquerschnitt 36a umfasst einen Gesamtdurchmesser 92a des Drahts 14a. Der Außenquerschnitt 36a umfasst den Durchmesser 96a des Drahtkerns 90a. Die Beschichtung 28a weist eine Schichtdicke 94a auf. Der Außenquerschnitt 36a umfasst die Schichtdicke 94a der Beschichtung 28a, insbesondere der Korrosionsschutzbeschichtung 30a, des Drahts 14a.

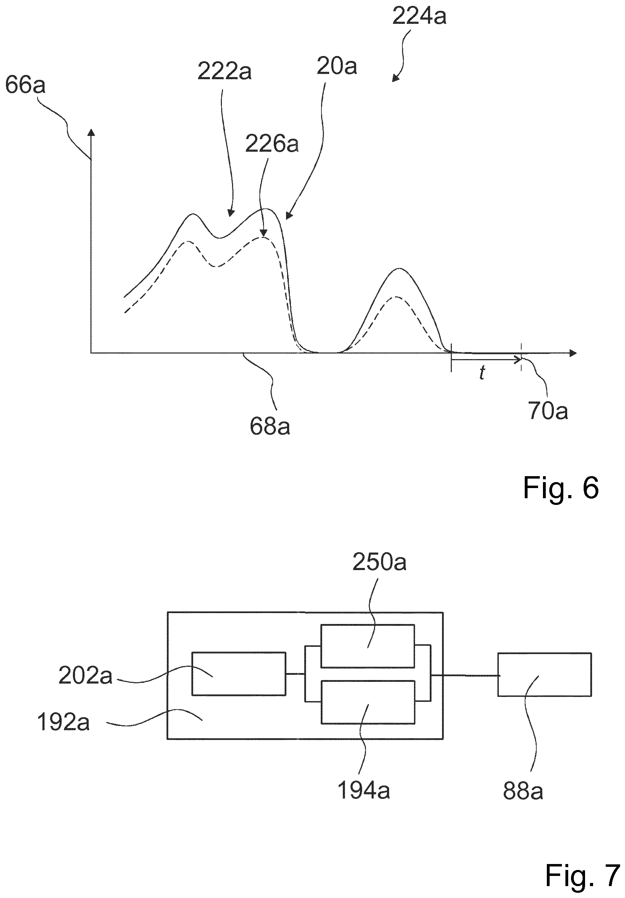

Das System 62a weist ein Überwachungssystem 60a auf (vgl. Fig. 1). Das Überwachungssystem 60a umfasst eine Mehrzahl an Überwachungsvorrichtungen. Das Überwachungssystem 60a umfasst eine Mehrzahl an Korrosionsüberwachungseinheiten 18a. Eine Korrosionsüberwachungseinheit 18a ist dazu vorgesehen, zumindest einen Korrosionsindikator 20a zu überwachen (vgl. Fig. 6). Der Korrosionsindikator 20a ist als ein Stromfluss ausgebildet. Die Korrosionsüberwachungseinheit 18a ist dazu vorgesehen, ein Korrosionselement 26a, erfindungsgemäß Korrosionsindikatoren 20a des Korrosionselements 26a, zu überwachen.

Die Mehrzahl an Überwachungsvorrichtungen kann zumindest teilweise demselben Drahtnetz 10a oder unterschiedlichen Drahtnetzen 10a zugeordnet sein. Die Mehrzahl an Korrosionsüberwachungseinheiten 18a kann zumindest teilweise an demselben Drahtnetz 10a oder an unterschiedlichen Drahtnetzen 10a angeordnet sein. Die Überwachungsvorrichtungen sind vernetzt. Die Vernetzung der Überwachungsvorrichtungen ist drahtlos. Die Korrosionsüberwachungseinheit 18a ist mit weiteren Korrosionsüberwachungseinheiten 18a vernetzbar. Alternativ oder zusätzlich ist die Korrosionsüberwachungseinheit 18a mit weiteren Geräten, beispielsweise mit zumindest einem Smartphone 228a, zumindest einem Tablet, zumindest einer Drohne 230a und/oder zumindest einem internetfähigen Gerät 232a, beispielsweise einem Internetserver und/oder einem weiteren externen Empfänger 44a vernetzbar. Die Vernetzung der Korrosionsüberwachungseinheit 18a ist drahtlos.

Die Korrosionsüberwachungseinheit 18a ist an dem Drahtnetz 10a angeordnet. Die Korrosionsüberwachungseinheit 18a ist direkt an dem Drahtnetz 10a befestigt. Die Korrosionsüberwachungseinheit 18a kontaktiert das Drahtnetz 10a. Die Korrosionsüberwachungseinheit 18a weist eine Befestigungseinheit (nicht gezeigt) auf, welche zu einer Befestigung der Korrosionsüberwachungseinheit 18a an dem Drahtnetz 10a und relativ zu dem Drahtnetz 10a vorgesehen ist.

Die Korrosionsüberwachungseinheit 18a weist ein Korrosionskontrollelement 22a auf. Das Korrosionskontrollelement 22a ist dazu vorgesehen, zumindest Teilinformationen zur Bestimmung des Korrosionsindikators 20a zu liefern. Das Korrosionskontrollelement 22a ist als ein ACM (Atmospheric Corrosion Monitor) Sensor 216a ausgebildet. Die Korrosionsüberwachungseinheit 18a weist zumindest ein weiteres Korrosionskontrollelement 48a auf. Das weitere Korrosionskontrollelement 48a ist zumindest im Wesentlichen identisch zu dem Korrosionskontrollelement 22a ausgebildet. Das weitere Korrosionskontrollelement 48a ist als ein ACM (Atmospheric Corrosion Monitor) Sensor 216a ausgebildet. Das weitere Korrosionskontrollelement 48a weist eine räumliche Orientierung auf, die wesentlich verschieden ist von einer räumlichen Orientierung des Korrosionskontrollelements 22a. Zudem weist die Korrosionsüberwachungseinheit 18a zusätzliche weitere Korrosionskontrollelemente 116a, 118a auf. Die zusätzlichen weiteren Korrosionskontrollelemente 116a, 118a sind zumindest im Wesentlichen identisch zu dem Korrosionskontrollelement 22a ausgebildet. Das zusätzliche weitere Korrosionskontrollelemente 116a weist eine zumindest im Wesentlichen identische Orientierung auf wie das Korrosionskontrollelement 22a. Das zusätzliche weitere Korrosionskontrollelemente 118a weist eine zumindest im Wesentlichen identische Orientierung auf wie das weitere Korrosionskontrollelement 48a.

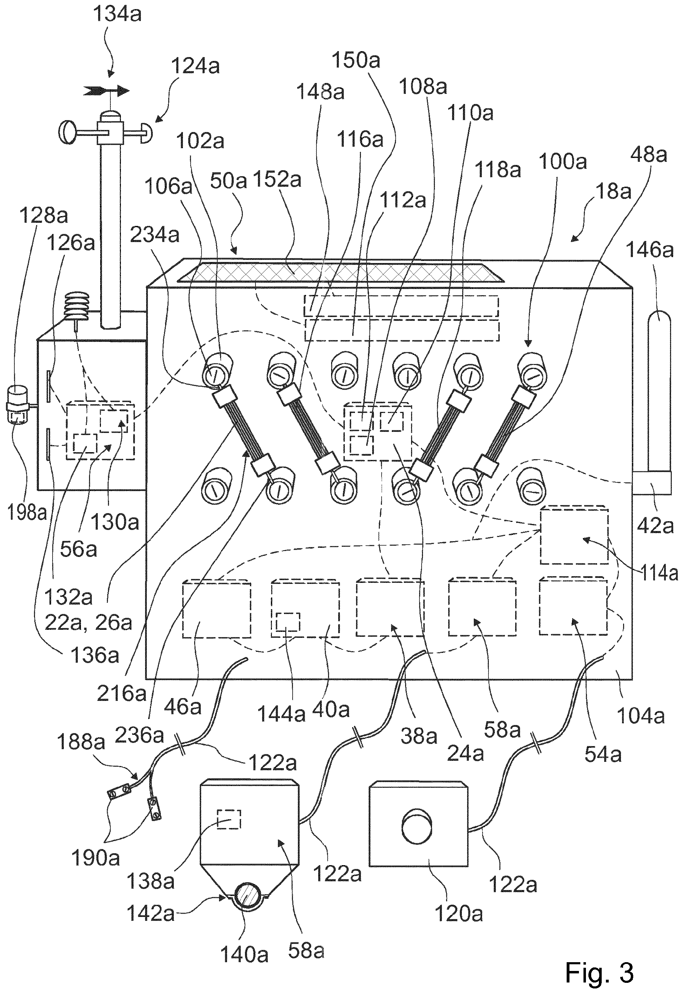

Die Korrosionsüberwachungseinheit 18a weist eine Halteeinheit 100a auf. Die Halteeinheit 100a ist zu einer Halterung des Korrosionskontrollelements 22a, 48a an der Korrosionsüberwachungseinheit 18a vorgesehen. Die Halteeinheit 100a ist zu einer Halterung des Korrosionskontrollelements 22a, 48a relativ zu der Korrosionsüberwachungseinheit 18a vorgesehen. Die Halteeinheit 100a weist eine Mehrzahl von Halterungen 102a auf. Die Halterungen 102a sind als Halteklemmen 106a ausgebildet. Die Halterungen 102a kontaktieren das Korrosionskontrollelement 22a, 48a zumindest elektrisch. Dazu wird beispielsweise ein Kontaktelement 234a, 236a eines Korrosionskontrollelements 22a, 48a in den Bereich einer gelockerten Halteklemme 106a gebracht und durch Anziehen einer Schraube befestigt. Die Halterungen 102a sind von einem Grundkörper 104a der Korrosionsüberwachungseinheit 18a abgehoben ausgebildet. Dadurch kann vorteilhaft ein Einfluss der Korrosionsüberwachungseinheit 18a auf eine Korrosion eines gehalterten Korrosionskontrollelements 22a, 48a, beispielsweise durch Abschattung reduziert werden. Es ist denkbar, dass die Halterungen 102a das Korrosionskontrollelement 22a, 48a weiter von dem Grundkörper 104 der Korrosionsüberwachungseinheit 18a entfernt haltern, als in dem in Fig. 3 gezeigten Ausführungsbeispiel um einen Einfluss der Korrosionsüberwachungseinheit 18a auf eine Korrosion eines gehalterten Korrosionskontrollelements 22a, 48a weiter zu verringern. Dazu ist beispielsweise eine separat an dem Drahtnetz 10a befestigbare Halteeinheit 100a und/oder Halterung 102a denkbar.

Die Korrosionsüberwachungseinheit 18a weist eine elektrische Sensoreinheit 24a auf (vgl. Fig. 3). Die elektrische Sensoreinheit 24a ist dazu vorgesehen, den Korrosionsindikator 20a zu überwachen. Die elektrische Sensoreinheit 24a umfasst ein Voltmeter 108a. Das Voltmeter 108a ist zu einer Messung einer an dem Korrosionskontrollelement 22a, 48a anliegenden Spannung vorgesehen. Die elektrische Sensoreinheit 24a umfasst ein Strommessgerät 110a. Das Strommessgerät 110a ist zu einer Messung eines Stromflusses durch das Korrosionskontrollelement 22a, 48a und/oder innerhalb des Korrosionskontrollelements 22a, 48a vorgesehen. Das Strommessgerät 110a ist als ein Null-Ohm-Strommessgerät ausgebildet. Das Strommessgerät 110a ist dazu vorgesehen einen galvanischen Strom des ACM Sensors 216a zu messen.

Die elektrische Sensoreinheit 24a weist ein Strom- und/oder Spannungserzeugungsmodul 112a auf. Das Strom- und/oder Spannungserzeugungsmodul 112a ist dazu vorgesehen, einen Strom und/oder eine Spannung an dem Korrosionskontrollelement 22a, 48a anzulegen. Die Korrosionsüberwachungseinheit 18a ist zumindest teilweise gepulst betreibbar.

Das Strom- und/oder Spannungserzeugungsmodul 112a ist gepulst betreibbar. Die Korrosionsüberwachungseinheit 18a weist eine Steuer- und/oder Regeleinheit 114a auf. Die Steuer- und/oder Regeleinheit 114a ist gepulst betreibbar. Die Steuer- und/oder Regeleinheit 114a ist zu einer Regelung des gepulsten Betriebs der Korrosionsüberwachungseinheit 18a und/oder seiner Komponenten vorgesehen.

Die Korrosionsüberwachungseinheit 18a ist dazu vorgesehen, zumindest einen, weiteren Korrosionsindikator 52a zu überwachen. Der weitere Korrosionsindikator 52a ist verschieden von dem Korrosionsindikator 20a. Im gezeigten Ausführungsbeispiel ist der weitere Korrosionsindikator 52a als eine zumindest teilweise Oberflächenverfärbung eines Korrosionselements 26a und/oder eines Korrosionskontrollelements 22a, 48a ausgebildet. Die Oberflächenverfärbung umfasst eine Rostrotfärbung des Korrosionselements 26a und/oder des Korrosionskontrollelements 22a, 48a. Alternativ umfasst der weitere Korrosionsindikator 52a eine Oberflächenverfärbung zumindest eines Teils des zu überwachenden Drahtnetzes 10a. Die Überwachung des weiteren Korrosionsindikators 52a dient vorwiegend zu einer Plausibilitätsprüfung der Messergebnisse des Korrosionsindikators 20a.

Die Korrosionsüberwachungseinheit 18a weist zumindest eine weitere elektrische Sensoreinheit 54a auf. Die weitere elektrische Sensoreinheit 54a ist dazu vorgesehen, den weiteren Korrosionsindikator 52a zu überwachen. Eine Detektionsmethode der weiteren elektrischen Sensoreinheit 54a ist verschieden von einer Detektionsmethode der elektrischen Sensoreinheit 24a. Die Detektionsmethode der weiteren elektrischen Sensoreinheit 54a umfasst eine visuelle Erfassung einer Oberfläche eines Korrosionselements 26a. Die weitere elektrische Sensoreinheit 54a weist eine Kamera 120a auf. Die Steuer- und/oder Regeleinheit 114a ist dazu vorgesehen, eine Farb- und/oder Bilderkennung der mittels der Kamera 120a aufgenommenen Bilder vorzunehmen. Das Datenübertragungsmodul 38a ist dazu vorgesehen, von der weiteren elektrischen Sensoreinheit 54a aufgenommene Bilder und/oder von der Steuer- und/oder Regeleinheit 114a anhand von Bildern erfasste Daten auszugeben. Die weitere elektrische Sensoreinheit 54a ist gepulst betreibbar. Beispielsweise erfasst die Kamera 120a alle ein bis zwei Wochen ein Bild. Die Kamera 120a ist mittels einer Kabelverbindung 122a mit dem Grundkörper 104a verbunden. Alternativ ist vorstellbar, dass die Kamera 120a drahtlos mit der Korrosionsüberwachungseinheit 18a, insbesondere der Steuer- und/oder Regeleinheit 114a und/oder einem Datenübertragungsmodul 38a der Korrosionsüberwachungseinheit 18a kommuniziert.

Die Korrosionsüberwachungseinheit 18a weist eine Umgebungssensoreinheit 56a auf. Die Umgebungssensoreinheit 56a ist dazu vorgesehen, zumindest einen Umgebungs- und/oder Witterungsparameter zu überwachen. Die Umgebungssensoreinheit 56a weist ein Anemometer 124a auf. Das Anemometer 124a ist zu einer Messung einer Windgeschwindigkeit vorgesehen. Die Umgebungssensoreinheit 56a weist ein Thermometer 126a auf. Das Thermometer 126a ist zu einer Messung einer Umgebungstemperatur vorgesehen. Die Umgebungssensoreinheit 56a weist einen Niederschlagsmesser 128a auf. Der Niederschlagsmesser 128a ist zu einer Messung einer Niederschlagsmenge vorgesehen. Es ist vorstellbar, dass der Niederschlagsmesser 128a ein Säuremessgerät 198a zu einer Bestimmung eines pH-Werts eines Niederschlags aufweist. Die Umgebungssensoreinheit 56a weist ein Feinstaubmessgerät 130a auf. Das Feinstaubmessgerät 130a ist zu einer Messung einer Feinstaubkonzentration, insbesondere PM₁₀, vorgesehen. Die Umgebungssensoreinheit 56a weist ein Gasmessgerät 132a auf. Das Gasmessgerät 132a ist zu einer Messung einer Gaskonzentration, insbesondere SOₓ, NOₓ und/oder Os vorgesehen. Die Umgebungssensoreinheit 56a weist ein Windrichtungsmessgerät 134a auf. Das Windrichtungsmessgerät 134a ist zu einer Messung einer Windrichtung vorgesehen. Die Umgebungssensoreinheit 56a weist ein Hydrometer 136a auf. Das Hydrometer 136a ist zu einer Messung einer relativen Luftfeuchtigkeit vorgesehen. Die Datenübertragungsmodul 38a ist dazu vorgesehen, von der Umgebungssensoreinheit 56a aufgenommene Daten auszugeben. Die Umgebungssensoreinheit 56a ist gepulst betreibbar. Beispielsweise erfasst die Umgebungssensoreinheit 56a alle ein bis 24 Stunden je einen Umgebungsparameter. Die Umgebungssensoreinheit 56a ist fest mit dem Grundkörper 104a verbunden. Alternativ ist vorstellbar, dass die Umgebungssensoreinheit 56a drahtlos mit der Korrosionsüberwachungseinheit 18a, insbesondere der Steuer- und/oder Regeleinheit 114a und/oder dem Datenübertragungsmodul 38a kommuniziert.

Die Korrosionsüberwachungseinheit 18a weist zumindest eine Einschlagssensoreinheit 58a auf. Die Einschlagssensoreinheit 58a ist dazu vorgesehen, Einschläge dynamischer Einschlagskörper in ein zu überwachendes Drahtnetz 10a zu sensieren. Die Einschlagssensoreinheit 58a umfasst zumindest einen Beschleunigungssensor 138a. Der Beschleunigungssensor 138a ist dazu vorgesehen, Beschleunigungen, welche bei einem Einschlag eines dynamischen Einschlagskörpers auftreten zu erfassen. Die Einschlagssensoreinheit 58a zu einer Montage an einem, das Drahtnetz 10a tragenden Tragseil 140a vorgesehen. Die Einschlagssensoreinheit 58a weist ein Montageelement 142a auf. Das Montageelement 142a ist dazu vorgesehen, dass das Drahtnetz 10a tragende Tragseil 140a in Umfangsrichtung zu umschließen. Die Einschlagssensoreinheit 58a ist dazu vorgesehen, Bewegungen, insbesondere Beschleunigungen, des das Drahtnetz 10a tragenden Tragseils 140a zu erfassen. Das Datenübertragungsmodul 38a ist dazu vorgesehen, von der Einschlagssensoreinheit 58a aufgenommene Daten auszugeben. Die Einschlagssensoreinheit 58a ist mittels einer Kabelverbindung 122a fest mit dem Grundkörper 104a verbunden. Alternativ ist vorstellbar, dass die Einschlagssensoreinheit 58a drahtlos mit der Korrosionsüberwachungseinheit 18a, insbesondere der Steuer- und/oder Regeleinheit 114a und/oder dem Datenübertragungsmodul 38a kommuniziert.

Das Datenübertragungsmodul 38a ist dazu vorgesehen, einen ermittelten Korrosionsindikator 20a, 52a auszugeben. Das Datenübertragungsmodul 38a gibt von der elektrischen Sensoreinheit 24a ermittelte Daten, insbesondere den Korrosionsindikator 20a, 52a, an weitere Komponenten der Korrosionsüberwachungseinheit 18a aus. Die Korrosionsüberwachungseinheit 18a weist zumindest ein Datenloggermodul 40a auf. Das Datenloggermodul 40a ist dazu vorgesehen, zumindest eine Ausgabe des Datenübertragungsmoduls 38a aufzuzeichnen. Das Datenloggermodul 40a ist dazu vorgesehen, eine Zeitreihe des Korrosionsindikators 20a (vgl. auch Fig. 6), des weiteren Korrosionsindikators 52a, eines durch die Umgebungssensoreinheit 56a erfassten Parameters und/oder des durch die Einschlagssensoreinheit 58a erfassten Parameters aufzuzeichnen. Das Datenloggermodul 40a weist eine Speichereinheit 144a mit einem physikalischen und/oder virtuellen Speicher auf. Die Speichereinheit 144a ist dazu vorgesehen, durch das Datenloggermodul 40a aufgezeichnete Korrosionsindikatoren 20a, 52a und/oder Zeitreihen zumindest temporär abzuspeichern.

Die Korrosionsüberwachungseinheit 18a weist zumindest ein Korrekturmodul 46a auf. Das Korrekturmodul 46a ist zumindest dazu vorgesehen, potentiell auftretende systematische Fehler bei einer Überwachung der Korrosion und/oder eines Korrosionsindikators 20a, 52a zu erkennen und/oder zu korrigieren. Das Korrekturmodul 46a ist dazu vorgesehen, Drifts in einem Datensatz und/oder einer Zeitreihe automatisch zu erkennen. Zu einer Drifterkennung kann das Korrekturmodul 46a auf Rechenkapazitäten der Steuer- und/oder Regeleinheit 114a zurückgreifen.

Die Korrosionsüberwachungseinheit 18a weist ein Kommunikationsmodul 42a auf. Das Kommunikationsmodul 42a ist zumindest dazu vorgesehen, von dem Datenübertragungsmodul 38a ausgegebene Daten an einen externen Empfänger 44a zu kommunizieren. Das Kommunikationsmodul 42 weist eine Sende- und/oder Empfangsantenne 146a zu einem Versenden und/oder Empfangen von elektromagnetischen Wellen als Informationsträger auf. Das Kommunikationsmodul 42a ist dazu vorgesehen, mittels einer Telekommunikationsverbindung zu kommunizieren. Das Kommunikationsmodul 42a ist dazu vorgesehen, automatisiert Daten zu Korrosionsindikatoren 20a, 52a und/oder Umgebungs- und/oder Witterungsparametern zu versenden. Das Kommunikationsmodul 42a ist dazu vorgesehen, Mitteilungen, insbesondere Textmitteilungen automatisiert zu versenden. Das Kommunikationsmodul 42a kommuniziert mittels eines Mobilfunkstandards für Datenübertragung. Der Mobilfunkstandard ist als GSM Datenverbindung ausgebildet. Alternativ könnte der Mobilfunkstandard als EDGE Datenverbindung, GPRS Datenverbindung und/oder HSCSD Datenverbindung ausgebildet sein.

Die Korrosionsüberwachungseinheit 18a weist eine Kontaktierungseinheit 188a auf. Die Kontaktierungseinheit 188a weist zwei Kontaktklemmen 190a auf. Die Kontaktklemmen 190a sind zu einer Kontaktierung eines Korrosionselements 26a zur Ermittlung des Korrosionsindikators 20a vorgesehen. Die Kontaktklemmen 190a sind mittels einer Kabelverbindung 122a mit dem Grundkörper 104a verbunden.

Die Überwachungsvorrichtung weist eine Photovoltaikeinheit 50a auf. Die Photovoltaikeinheit 50a ist zu einer Strom- und/oder Spannungsversorgung der Korrosionsüberwachungseinheit 18a, insbesondere der Komponenten der Korrosionsüberwachungseinheit 18a, vorgesehen. Die Photovoltaikeinheit 50a weist ein Solarpanel 152a mit Solarzellen auf. Das Solarpanel 152a ist zu einer Umwandlung von Licht in elektrische Energie vorgesehen. Die Korrosionsüberwachungseinheit 18a weist einen Akkumulator 148a auf. Die Korrosionsüberwachungseinheit 18a weist eine Batterie 150a auf. Der Akkumulator 148a und/oder die Batterie 150a ist zu einer Strom- und/oder Spannungsversorgung der Korrosionsüberwachungseinheit 18a, insbesondere der Komponenten der Korrosionsüberwachungseinheit 18a, vorgesehen. Die Photovoltaikeinheit 50a ist zu einem elektrischen Aufladen des Akkumulators 148a vorgesehen. Die Batterie 150a ist zu einer Strom- und/oder Spannungsversorgung der Korrosionsüberwachungseinheit 18a bei entladenem Akkumulator 148a vorgesehen.

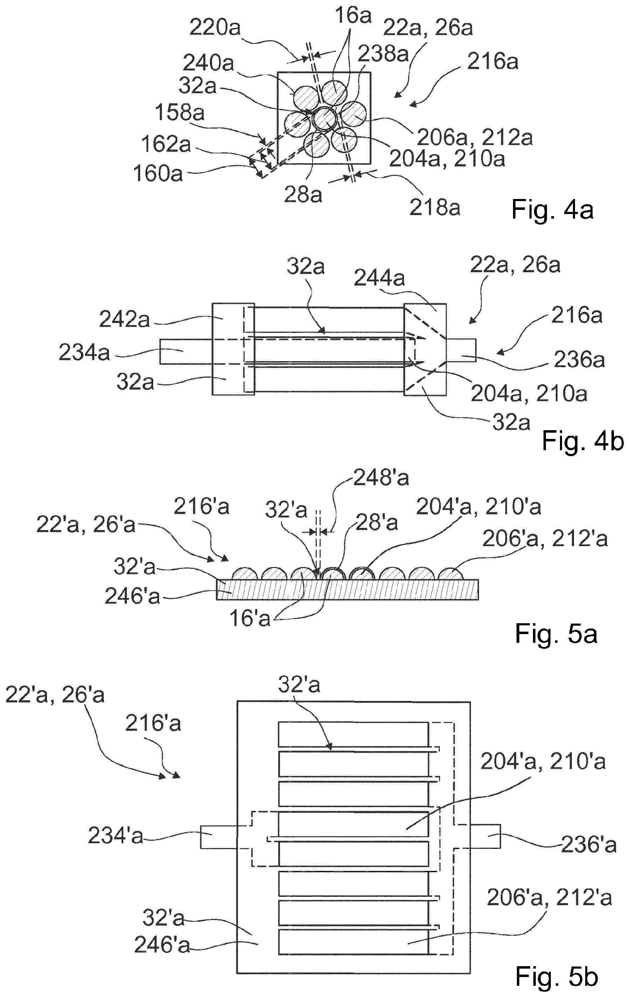

Fig. 4a zeigt einen Querschnitt eines Korrosionselements 26a. Das Korrosionselement 26a ist als ein Korrosionskontrollelement 22a, 48a ausgebildet. Das Korrosionskontrollelement 22a, 48a ist als ein ACM Sensor 216a ausgebildet. Der ACM Sensor 216a umfasst sieben Elektroden 204a, 206a. Die Elektroden 204a, 206a sind parallel zueinander ausgerichtet. Sechs äußere Elektroden 206a sind um eine zentrale Elektrode 204a kreisförmig angeordnet. Eine Elektrode 204a bildet eine Anode 210a aus. Eine Elektrode 206a bildet eine Kathode 212a aus. Die sechs äußeren Elektroden 206a bilden zusammen eine Kathode 212a aus. Die die Anode 210a ausbildende Elektrode 204a ist im Wesentlichen identisch zu dem Draht 14a ausgebildet. Die die Anode 210a ausbildende Elektrode 204a weist eine Beschichtung 28a auf. Die Beschichtung 28a der Anode 210a ist zumindest im Wesentlichen identisch zu einer Korrosionsschutzbeschichtung 30a des Drahts 14a des zu überwachenden Drahtnetzes 10a ausgebildet. Die die Kathode 212a ausbildenden Elektroden 206a weisen zumindest im Bereich des gezeigten Querschnitts eine im Wesentlichen identische Außenform zu einer Außenform der Anode 210a auf. Eine Oberfläche 240a der die Kathode 212a ausbildenden Elektroden 206a weist ein edleres Metall auf als eine Oberfläche 238a der Kathode 212a. Die Oberfläche 240a der Kathode 212a ist aus einem Stahl, insbesondere einem hochfesten Stahl 16a, ausgebildet. Die Oberfläche 238a der Anode 210a ist aus Zink ausgebildet. Die Elektroden 204a, 206a sind berührungsfrei zueinander angeordnet. Der ACM Sensor 216a weist einen elektrischen Isolator 32a auf. Der elektrische Isolator 32a ist als ein Luftspalt ausgebildet. Zwischen der Anode 210a und den Elektroden 206a der Kathode 212a besteht ein Abstand 218a. Der Abstand 218a zwischen der Anode 210a und den Elektroden 206a der Kathode 212a beträgt 0,2 mm. Zwischen den Elektroden 206a der Kathode 212a besteht ein Abstand 220a. Der Abstand 220a zwischen den Elektroden 206a der Kathode 212a beträgt 0,2 mm.

Fig. 4b zeigt eine Seitenansicht des als ACM Sensor 216a ausgebildeten Korrosionskontrollelements 22a, 48a. An den seitlichen Enden weist der ACM Sensor 216a zwei als Isolatoren 32a ausgebildete Endkappen 242a, 244a auf. Die Endkappen 242a, 244a dienen als Halterung für die Elektroden 204a, 206a. Die Elektrode 204a der Anode 210a ist durch eine Endkappe 242a hindurchgeführt. Der hindurchgeführte Teil der Anode 210a bildet das Kontaktelement 234a aus. Die Elektroden 206a der Kathode 212a sind in einer Endkappe 244a zusammengeführt und gemeinsam durch die Endkappe 244a hindurchgeführt. Der hindurchgeführte Teil der Kathode 212a bildet das weitere Kontaktelement 236a aus. Im trockenen Zustand ist wegen dem Isolator 32a die Verbindung Anode 210a zu Kathode 212a stromfrei. Bei einer Benetzung des ACM Sensors 216a, beispielsweise durch Kondensationsfeuchte oder Niederschlagsfeuchte kann mittels in Wasser gelöster leitfähiger Teilchen, beispielsweise Ionen, ein Strom fließen. Unterschiedliche Redoxpotentiale der verschiedenen Materialien von Anode 210a und Kathode 212a treiben diesen Stromfluss. Bei Stromfluss wird Material von der Anode 210a abgetragen. Der Stromfluss ist proportional zu dem Materialabtrag (vgl. Fig. 6). Der Stromfluss ist abhängig von der Art und Menge im Wasser gelöster Chemikalien. Beispielsweise führt eine steigende Menge von Salzen, beispielsweise Sulfate oder Kochsalz, zu einem erhöhten Stromfluss.

In der in Fig. 5a gezeigten alternativen Ausführung eines ACM Sensors 216'a ist eine alternative Anordnung der Elektroden 204'a, 206'a des ACM Sensors 216'a gezeigt. Die Elektroden 204'a, 206'a weisen eine einem halbierten Draht entsprechende Außenform auf. Die Elektroden 204'a, 206'a sind auf ihrer flachen Seite auf einem Substrat 246'a aufgebracht. Das Substrat 246'a ist als ein elektrischer Isolator 32'a ausgebildet. Die Elektroden 204'a, 206'a sind parallel zueinander ausgerichtet. Die Elektroden 204'a, 206'a sind auf einer gemeinsamen Ebene ausgerichtet. Die Elektroden 204'a, 206'a sind zueinander beabstandet angeordnet. Ein Abstand 248'a zwischen zwei Elektroden 204'a, 206'a beträgt 0,2 mm. Zwei zentrale Elektroden 204'a bilden eine Anode 210'a. Sechs äußere Elektroden 206'a bilden eine Kathode 212'a. Die zwei Elektroden 204'a der Anode 210'a sind an einem seitlichen Ende des ACM Sensors 216'a zu einem Kontaktelement 234'a zusammengeführt (vgl. Fig. 5b). Die sechs Elektroden 206'a der Kathode 212'a sind an einem weiteren seitlichen Ende des ACM Sensors 216'a zu einem weiteren Kontaktelement 236'a zusammengeführt.

In Fig. 6 ist ein Strom-Zeit-Diagramm 224a gezeigt. Auf der Abszisse 66a ist ein Stromfluss des ACM Sensors 216a aufgetragen. Auf der Ordinate 68a ist eine Zeit aufgetragen. Der Stromfluss zeigt einen alternierenden Kurvenverlauf 222a. Der Kurvenverlauf 222a zeigt Teilabschnitte ohne einem Stromfluss. Als gestrichelte Kurve ist ein Kurvenverlauf 226a eines Materialabtrags der Anode 210a gezeigt. Der Kurvenverlauf 222a des Stromflusses und der Kurvenverlauf 226a des Materialabtrags korrelieren. Ein hoher Wert des Stromflusses bedeutet einen hohen Wert des Materialabtrags und umgekehrt. Ein Anstieg des Stromflusses ist indikativ für ein Verstärken der Korrosion. Bei einem Abfall des Stromflusses auf Null beginnt in der Steuer- und/oder Regeleinheit 114a eine Zeit t zu laufen. Erreicht die Zeit t einen Schwellenwert 70a, ohne zwischenzeitlich wieder auf einen Wert über Null gestiegen zu sein verschickt das Kommunikationsmodul 42a eine Warnmeldung.

Fig. 7 zeigt ein Ablaufdiagramm eines Verfahrens zur Überwachung einer Korrosion eines Drahtnetzes 10a. In zumindest einem Verfahrensschritt 192a wird der Korrosionsindikator 20a von der Korrosionsüberwachungseinheit 18a überwacht. In zumindest einem Verfahrensschritt 202a wird der Korrosionsindikator 20a mittels der elektrischen Sensoreinheit 24a ermittelt. In zumindest einem Verfahrensschritt 250a wird eine Stärke der Korrosion mittels eines Stromflusses des ACM Sensors 216a bestimmt. In zumindest einem Verfahrensschritt 194a wird ein Fortschritt der Korrosion mittels einer Änderung des elektrischen Widerstands und/oder einer Änderung der elektrischen Leitfähigkeit des Korrosionselements 26a und/oder des Korrosionskontrollelements 22a bestimmt. In zumindest einem Verfahrensschritt 88a wird bei einem Überschreiten, Unterschreiten und/oder Erreichen des Schwellenwerts 70a des Korrosionsindikators 20a eine automatische Benachrichtigung ausgelöst, insbesondere mittels des Kommunikationsmoduls 42a automatisch versendet.

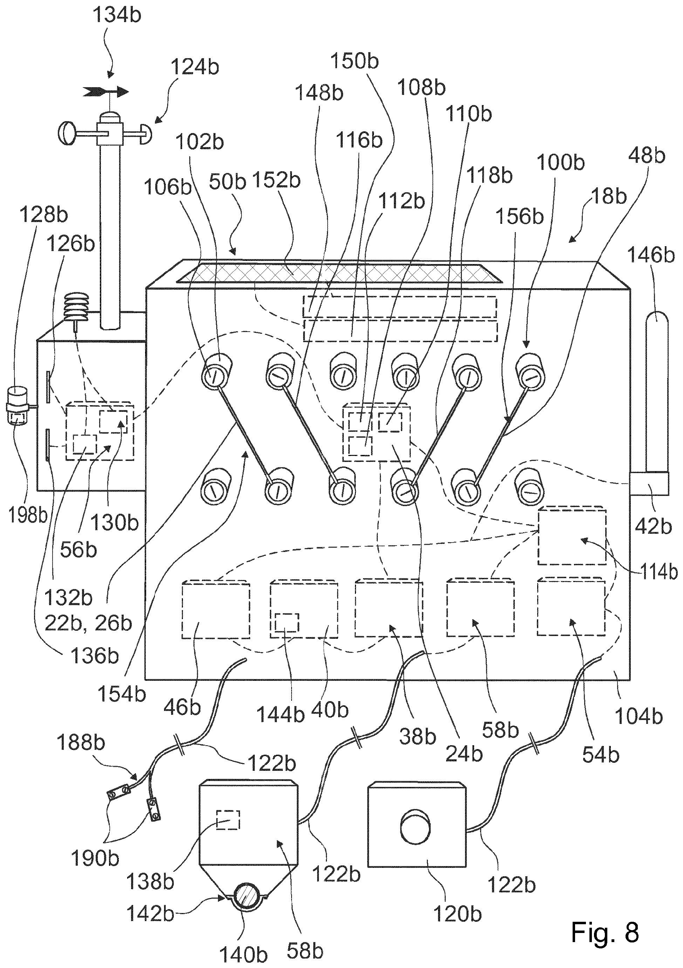

In den Figuren 8 bis 16 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In den Ausführungsbeispielen der Figuren 8 bis 15 ist der Buchstabe a durch die Buchstaben b bis d ersetzt

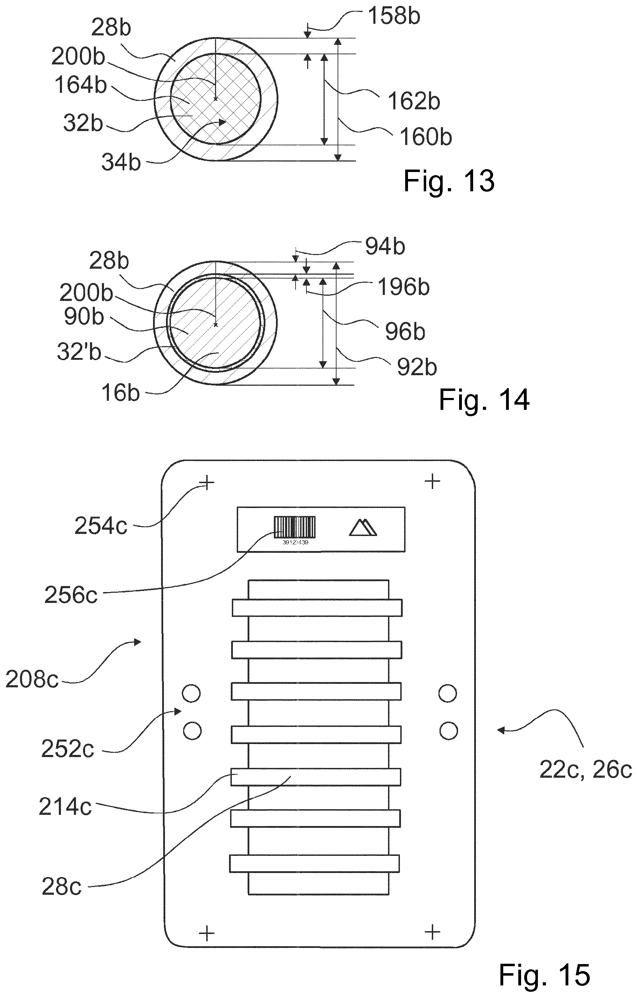

Fig. 8 zeigt eine alternative Überwachungsvorrichtung zur Überwachung einer Korrosion eines Drahtnetzes 10b. Die Überwachungsvorrichtung weist eine Korrosionsüberwachungseinheit 18b auf. Die Korrosionsüberwachungseinheit 18b ist dazu vorgesehen, zumindest einen alternativen Korrosionsindikator 20b zu überwachen. Die Korrosionsüberwachungseinheit 18b ist dazu vorgesehen, ein alternatives Korrosionselement 26b, insbesondere Korrosionsindikatoren 20b des Korrosionselements 26b, zu überwachen. Das Korrosionselement 26b ist als ein Korrosionskontrollelement 22b ausgebildet. Das Korrosionskontrollelement 22 ist im Wesentlichen identisch zu einem Teilstück eines Drahts 14b des Drahtnetzes 10b ausgebildet. Das Korrosionskontrollelement 22b weist eine gerade, drahtähnliche Form 154b auf. Das Korrosionskontrollelement 22b weist in einem Ausgangszustand einen Außenquerschnitt 34b (vgl. Fig. 13) auf, welcher zumindest im Wesentlichen identisch zu einem Außenquerschnitt 36b des Drahts 14b des zu überwachenden Drahtnetzes 10b in einem Auslieferungszustand des Drahtnetzes 10b ist.

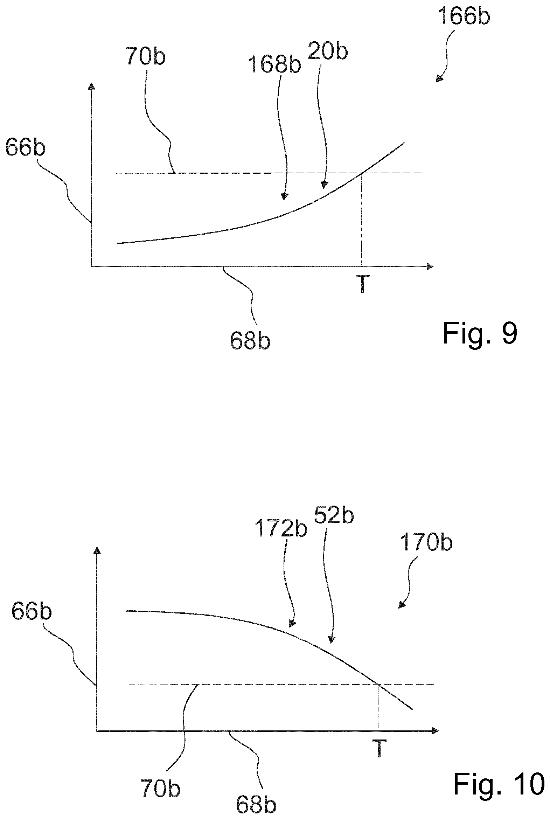

Der Korrosionsindikator 20b ist als eine physikalische und/oder chemische Eigenschaft eines Korrosionselements 26b ausgebildet. Der Korrosionsindikator 20b umfasst zumindest eine elektrische Leitfähigkeit des Korrosionselements 26b und/oder zumindest einen elektrischen Widerstand des Korrosionselements 26b. Der Korrosionsindikator 20b umfasst eine elektrische Leitfähigkeit einer Beschichtung 28b des Korrosionselements 26b und/oder einen elektrischen Widerstand der Beschichtung 28b des Korrosionselements 26b (vgl. Fig. 9 und Fig. 10). Die Korrosionsüberwachungseinheit 18b weist zumindest ein weiteres Korrosionskontrollelement 48b auf. Das weitere Korrosionskontrollelement 48b ist zumindest im Wesentlichen identisch zu dem Korrosionskontrollelement 22b ausgebildet. Das weitere Korrosionskontrollelement 48b weist eine gerade, drahtähnliche Form 156b auf. In Fig. 9 ist ein Widerstands-Zeit-Diagramm 166b gezeigt. Auf der Abszisse 66b ist der ohmsche Widerstand durch das Korrosionselement 26b aufgetragen. Auf der Ordinate 68b ist eine Zeit aufgetragen. Der ohmsche Widerstand zeigt einen ansteigenden Kurvenverlauf 168b. Ein Anstieg des ohmschen Widerstands ist indikativ für ein Fortschreiten der Korrosion. Zudem ist mit einer gestrichelten Linie ein Schwellenwert 70b des ohmschen Widerstands aufgezeigt. Der Schwellenwert 70b ist zeitlich konstant. Der ansteigende Kurvenverlauf 168b überschreitet den Schwellenwert 70b zu einem Zeitpunkt T.

In Fig. 10 ist ein Leitfähigkeit-Zeit-Diagramm 170b gezeigt. Auf der Abszisse 66b ist die elektrische Leitfähigkeit durch das Korrosionselement 26b aufgetragen. Auf der Ordinate 68b ist eine Zeit aufgetragen. Die elektrische Leitfähigkeit zeigt einen abfallenden Kurvenverlauf 172b. Ein Abfall der elektrischen Leitfähigkeit ist indikativ für ein Fortschreiten der Korrosion. Zudem ist mit einer gestrichelten Linie ein Schwellenwert 70b der elektrischen Leitfähigkeit aufgezeigt. Der Schwellenwert 70b ist zeitlich konstant. Der abfallende Kurvenverlauf 172b unterschreitet den Schwellenwert 70b zu einem Zeitpunkt T.

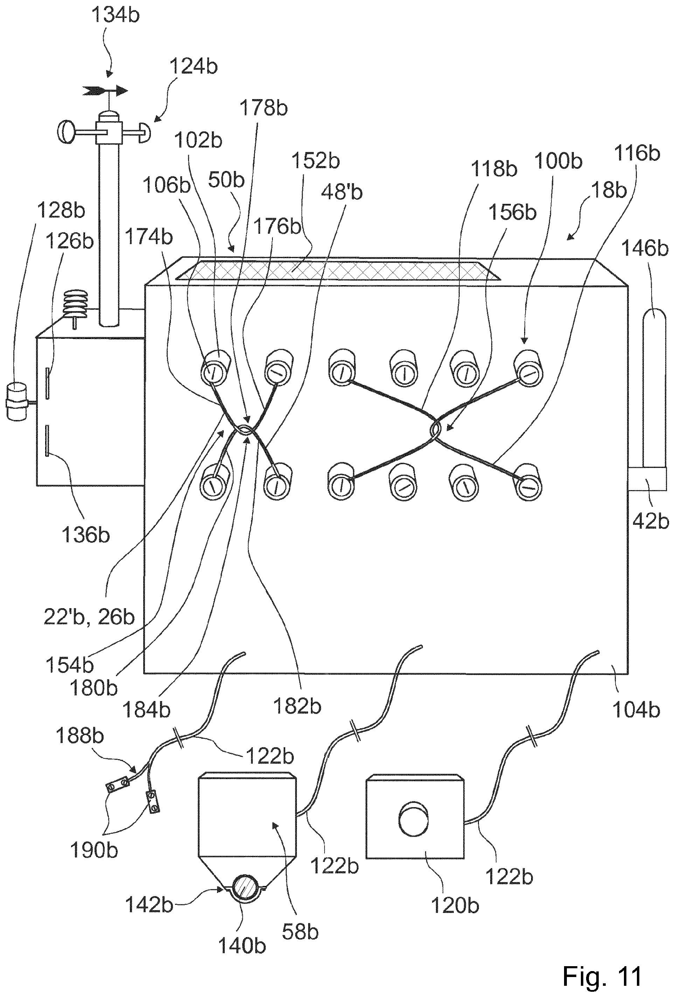

In Fig. 11 ist die alternative Korrosionsüberwachungseinheit 18b mit einem zweiten weiteren alternativen Korrosionskontrollelement 22'b und einem zweiten weiteren alternativen weiteren Korrosionskontrollelement 48'b gezeigt. Das Korrosionskontrollelement 22'b weist zwei Schenkel 174b, 176b und eine Biegestelle 178b auf. Das weitere Korrosionskontrollelement 48'b weist zwei Schenkel 180b, 182b und eine Biegestelle 184b auf. Die Schenkel 174b, 176b, 180b, 182b sind zumindest im Wesentlichen identisch zu den Schenkeln 74b, 76b des Wendels 72b des Drahtnetzes 10b ausgebildet. Die Biegestellen 178b, 184b sind zumindest im Wesentlichen identisch zu der Biegestelle 78b des Wendels 72b ausgebildet. Das Korrosionskontrollelement 22'b und das weitere Korrosionskontrollelement 48'b greifen ineinander ein. Der Korrosionsindikator 20b wird zwischen den zwei Schenkeln 174b, 176b des Korrosionskontrollelements 22'b abgegriffen. Die zwei Schenkel 180b, 182b des weiteren Korrosionskontrollelements 48'b sind an Halterungen 102b der Halteeinheit 100b der Korrosionsüberwachungseinheit 18b elektrisch isoliert. Die in Fig. 11 gezeigte Anordnung von Korrosionskontrollelementen 22'b, 48'b bildet vorteilhaft eine Anordnung von Wendeln 72b des Drahtnetzes 10b nach, wodurch vorteilhaft eine realitätsnahe Korrosionsüberwachung ermöglicht werden kann.

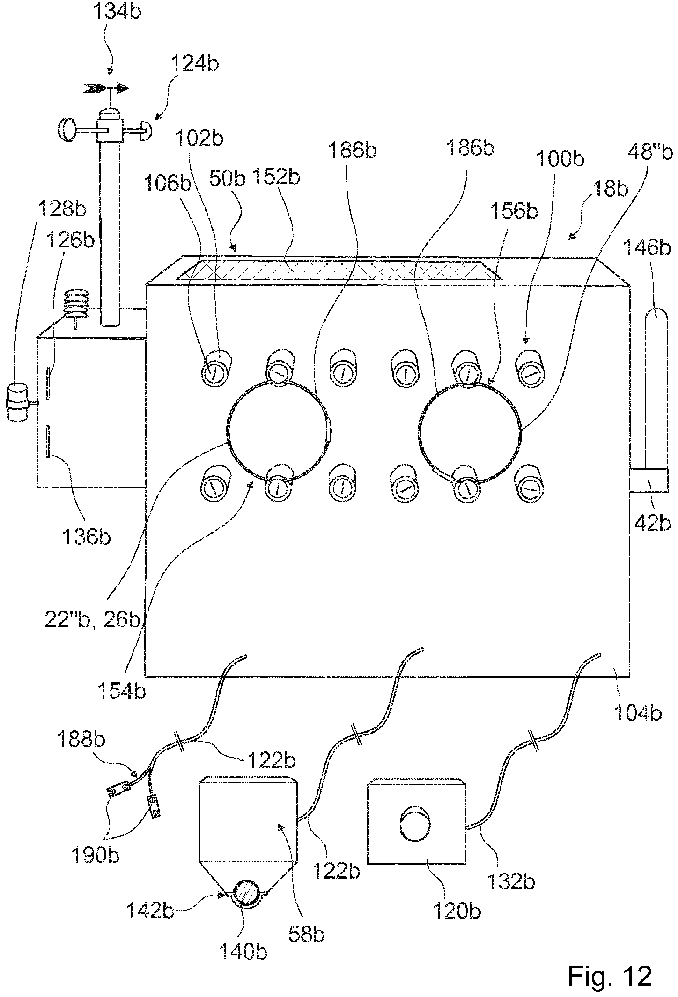

In Fig. 12 ist die alternative Korrosionsüberwachungseinheit 18b mit einem dritten weiteren alternativen Korrosionskontrollelement 22"b gezeigt. Das Korrosionskontrollelement 22"b ist als ein Netzelement 12b eines Ringnetzes (nicht gezeigt) ausgebildet. Das Korrosionskontrollelement 22"b ist als ein in sich geschlossenes Ringelement 186b eines Ringnetzes ausgebildet. Der Korrosionsindikator 20b wird zwischen zwei Kontaktpunkten des Korrosionskontrollelements 22"b mit jeweils einer Halterung 102b abgegriffen. Das in Fig. 12 gezeigte Korrosionskontrollelement 22"b bildet vorteilhaft ein Ringelement 186b eines Ringnetzes nach, wodurch vorteilhaft eine realitätsnahe Korrosionsüberwachung eines Ringnetzes ermöglicht werden kann.

Fig. 13 zeigt einen Querschnitt eines alternativen Korrosionselements 26b. Das Korrosionselement 26b weist die Beschichtung 28b auf. Die Beschichtung 28b des Korrosionselements 26b ist zumindest im Wesentlichen identisch zu einer Korrosionsschutzbeschichtung 30b des Drahts 14b des zu überwachenden Drahtnetzes 10b ausgebildet. Die Beschichtung 28b des Korrosionselements 26b weist eine Schichtdicke 158b auf, welche zumindest im Wesentlichen identisch zu einer Schichtdicke 94b der Korrosionsschutzbeschichtung 30b des Drahts 14b ist. Die Beschichtung 28b des Korrosionselements 26b weist einen Außendurchmesser 160b auf, welcher zumindest im Wesentlichen identisch zu einem Gesamtdurchmesser 92b des Drahts 14b, insbesondere inklusive der Korrosionsschutzbeschichtung 30b des Drahts 14b, ist. Die Beschichtung 28b des Korrosionselements 26b weist einen Innendurchmesser 162b auf, welcher zumindest im Wesentlichen identisch zu einem Durchmesser 96b eines Drahtkerns 90b des Drahts 14b ist. Die Beschichtung 28b des Korrosionselements 26b ist aus einem Material ausgebildet, welches zumindest im Wesentlichen identisch zu dem Material der Beschichtung 28b des Drahts 14b ist.

Die Überwachungsvorrichtung weist einen elektrischen Isolator 32b auf. Das Korrosionselement 26b weist den elektrischen Isolator 32b auf. Das Korrosionskontrollelement 22b weist den elektrischen Isolator 32b auf. Der elektrische Isolator 32b ist zu einer zumindest teilweisen räumlichen Begrenzung eines Stromflusses durch das Korrosionselement 26b und/oder das Korrosionskontrollelement 22b vorgesehen. Der Stromfluss ist durch den elektrischen Isolator 32b auf einen der Korrosion am meisten ausgesetzten Teil des Korrosionselements 26b und/oder des Korrosionskontrollelements 22b räumlich begrenzt. Der Stromfluss ist durch den elektrischen Isolator 32b auf einen oberflächennahen Teil des Korrosionselements 26b und/oder des Korrosionskontrollelements 22b räumlich begrenzt. Unter "oberflächennah" soll insbesondere ein äußerer zylindermantelförmiger Bereich des Korrosionselements 26b und/oder des Korrosionskontrollelements 22b, welcher eine maximale Tiefe von 0,05*r, vorzugsweise 0,1*r und bevorzugt 0,2*r aufweist, wobei r insbesondere ein Radius 200b des Korrosionselements 26b und/oder des Korrosionskontrollelements 22b darstellt. Der Stromfluss ist durch den elektrischen Isolator 32b auf eine Beschichtung 28b des Korrosionselements 26b und/oder des Korrosionskontrollelements 22b räumlich begrenzt. Der elektrische Isolator 32b ist aus einem korrosionsbeständigen, elektrisch nichtleitenden Material, vorzugsweise aus einem Plastik und/oder einem Glas hergestellt. Der elektrische Isolator 32b ist zumindest teilweise in einem Inneren des Korrosionselements 26b angeordnet. Im in Fig. 13 gezeigten Ausführungsbeispiel bildet der elektrische Isolator 32b einen isolierenden Kern 164b des Korrosionselements 26b. Die Beschichtung 28b des Korrosionselements 26b ist haftend in Umfangsrichtung umschließend auf dem isolierenden Kern 164b des Korrosionselements 26b aufgebracht.

Im in Fig. 14 gezeigten Ausführungsbeispiel ist ein Korrosionselement 26b mit einem alternativen elektrischen Isolator 32'b gezeigt. Der elektrische Isolator 32'b ist als eine isolierende Zwischenschicht zwischen dem Drahtkern 90b des Korrosionselements 26b und der Beschichtung 28b des Korrosionselements 26b ausgebildet. Der elektrische Isolator 32'b trennt den Drahtkern 90b des Korrosionselements 26b und die Beschichtung 28b des Korrosionselements 26b elektrisch. Der elektrische Isolator 32'b des Korrosionselements 26b weist eine Schlauchform auf. Der elektrische Isolator 32'b des Korrosionselements 26b weist eine Schichtdicke 196b auf. Die Schichtdicke 196b ist kleiner als die Schichtdicke 94b der Beschichtung 28b des Korrosionselements 26b. Der elektrische Isolator 32'b des Korrosionselements 26b haftet auf einem hochfesten Stahl 16b des Drahtkerns 90b des Korrosionselements 26b. Der elektrische Isolator 32'b des Korrosionselements 26b haftet auf der Beschichtung 28b des Korrosionselements 26b. Der elektrische Isolator 32'b des Korrosionselements 26b führt zu einer Haftverbesserung der Beschichtung 28b des Korrosionselements 26b.

In Fig. 15 ist ein viertes weiteres alternatives Korrosionskontrollelement 22c der Korrosionsüberwachungseinheit 18c der Überwachungsvorrichtung zur Überwachung einer Korrosion eines Drahtnetzes 10c gezeigt. Das Korrosionskontrollelement 22c ist als ein Stäbchenindikator 208c ausgebildet. Der Stäbchenindikator 208c weist sieben Korrosionskontrollstäbchen 214c auf. Die Korrosionskontrollstäbchen 214c weisen an ihrer Oberfläche eine Beschichtung 28c auf. Die Beschichtung 28c der Korrosionskontrollstäbchen 214c ist jeweils unterschiedlich. Die Beschichtung 28c der Korrosionskontrollstäbchen 214c ist jeweils unterschiedlich dick. Die Beschichtungen 28c der Korrosionskontrollstäbchen 214c sind nach Dicke der Beschichtung 28c von oben nach unten aufsteigend angeordnet. Die fünf obersten Korrosionskontrollstäbchen 214c weisen eine Beschichtung 28c auf, welche dünner ist als eine Korrosionsschutzbeschichtung 30c eines Drahts 14c des zu überwachenden Drahtnetzes 10c. Das sechste Korrosionskontrollstäbchen 214c weist eine Beschichtung 28c auf, welche im Wesentlichen gleich dick ist wie die Korrosionsschutzbeschichtung 30c des Drahts 14c des zu überwachenden Drahtnetzes 10c. Das siebte Korrosionskontrollstäbchen 214c weist eine Beschichtung 28c auf, welche dicker ist als die Korrosionsschutzbeschichtung 30c des Drahts 14c des zu überwachenden Drahtnetzes 10c. Das Material der Beschichtung 28c der Korrosionskontrollstäbchen 214c entspricht im Wesentlichen dem Material der Korrosionsschutzbeschichtung 30c des Drahts 14c des zu überwachenden Drahtnetzes 10c. Die Beschichtung 28c der Korrosionskontrollstäbchen 214c ist als eine Zinkbeschichtung 86c ausgebildet. Der Stäbchenindikator 208c ist dazu vorgesehen in einem Nahbereich des Drahtnetzes 10c angebracht zu werden. Alternativ ist vorstellbar, dass der Stäbchenindikator 208c unabhängig von einem Drahtnetz 10c an einem Kontrollstandort aufgestellt wird. Dadurch kann vorteilhaft eine Korrosivität eines Standorts vor Installation eines Drahtnetzes 10c ermittelt werden, wodurch vorteilhaft eine optimierte Auswahl einer Korrosionsschutzbeschichtung 30c des Drahts 14c des zu installierenden Drahtnetzes 10c ermöglicht werden kann. Der Stäbchenindikator 208c weist Montageelemente 252c auf. Die Montageelemente 252c sind als Löcher zur Durchführung eines Montagemittels ausgebildet. Ein Montagemittel kann beispielsweise als ein Kabelbinder ausgebildet sein. Die Korrosionskontrollstäbchen 214c sind an dem Kontrollstandort korrosiven Umgebungsbedingungen, beispielsweise Witterungen, ausgesetzt. Die Korrosionskontrollstäbchen 214c korrodieren analog zu dem zu überwachenden Drahtnetz 10c. Bei fortschreitender Korrosion wird von jedem Korrosionskontrollstäbchen 214c die Beschichtung 28c nach und nach abgetragen. Wenn die Beschichtung 28c vollständig abgetragen ist erscheint das darunterliegende Kernmaterial des Korrosionskontrollstäbchens 214c. Das Kernmaterial entspricht im Wesentlichen einem Material eines Drahtkerns 90c des Drahts 14c. Das Kernmaterial ist hochfester Stahl 16c. Bei weiter fortschreitender Korrosion bildet sich Rotrost auf dem hochfesten Stahl 16c. Vorteilhaft kann ein Status der Korrosion mittels optischen Betrachtens des Stäbchenindikators 208c bestimmt werden. Anhand einer Anzahl der Korrosionskontrollstäbchen 214c welche bereits Rotrost aufweisen kann vorteilhaft eine Materialabtragung abgeschätzt werden. Eine Kamera 120c einer elektrischen Sensoreinheit 24c, 54c der Korrosionsüberwachungseinheit 18c ist dazu vorgesehen Bilder des Stäbchenindikators 208c aufzuzeichnen. Mittels einem Kommunikationsmodul 42c der Korrosionsüberwachungseinheit 18c werden die aufgenommenen Bilder des Stäbchenindikators 208c einem Bediener zur Betrachtung zur Verfügung gestellt. Alternativ oder zusätzlich kann eine Drohne 230c der Überwachungsvorrichtung Stäbchenindikatoren 208c abfliegen und fotografieren. Der Stäbchenindikator 208c weist vier Ausrichtmerkmale 254c auf. Die Ausrichtmerkmale 254c sind als Kreuze ausgebildet. Die Ausrichtmerkmale 254c sind jeweils im Nahbereich einer Ecke des Stäbchenindikators 208c angeordnet. Der Stäbchenindikator 208c weist ein Erkennungsmerkmal 256c auf. Das Erkennungsmerkmal 256c ist als ein Barcode ausgebildet. Das Erkennungsmerkmal 256c dient zu einer Zuordnung eines Stäbchenindikators 208c zu einem Standort und/oder einem Drahtnetz 10c. 254c

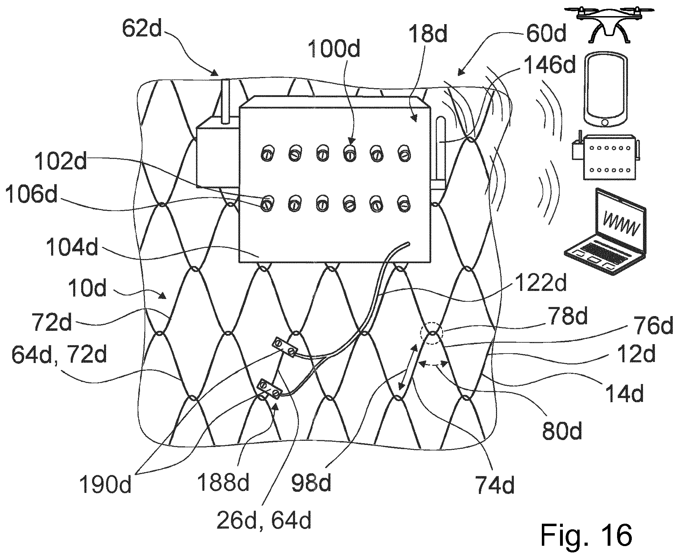

Fig. 16 zeigt ein alternatives System 62d zur Korrosionsüberwachung eines Drahtnetzes 10d. Das System 62d weist eine Überwachungsvorrichtung auf. Das System 62d weist ein Drahtnetz 10d auf. Das Drahtnetz 10d ist als ein Schutznetz zu einem Auf- und/oder Abfangen von schweren Lasten ausgebildet. Das Drahtnetz 10d ist aus ineinandergreifenden Netzelementen 12d ausgebildet. Das Netzelement 12d ist aus einem Draht 14d gefertigt. Der Draht 14d ist aus einem hochfesten Stahl 16d gefertigt. Das Drahtnetz 10d weist ein Indikatorelement 64d auf. Das Indikatorelement 64d bildet ein direkt zu überwachendes Korrosionselement 26d zumindest teilweise aus. Das Indikatorelement 64d ist als ein in das Drahtnetz 10d eingeflochtenes Netzelement 12d ausgebildet. Die Überwachungsvorrichtung weist eine Korrosionsüberwachungseinheit 18d auf. Die Korrosionsüberwachungseinheit 18d ist zu einer direkten Überwachung eines Korrosionselements 26d vorgesehen. Die Korrosionsüberwachungseinheit 18d weist eine Kontaktierungseinheit 188d auf. Die Kontaktierungseinheit 188d weist zwei Kontaktklemmen 190d auf. Die Kontaktklemmen 190d kontaktieren das Indikatorelement 64d an zwei separaten Stellen elektrisch. Die Kontaktklemmen 190d kontaktieren eine Beschichtung 28d das Indikatorelements 64d an zwei separaten Stellen elektrisch. Zur Überwachung des Korrosionsindikators 20d fließt ein Strom von einer Kontaktklemme 190d zu der anderen Kontaktklemme 190d durch das Indikatorelement 64d.

## Patentansprüche

1. Drahtnetzüberwachungsvorrichtung
für ein als eine Böschungssicherung, als ein Sicherheitszaun, als ein Fangzaun, als ein Steinschlag-Schutznetz, als ein Absperrzaun, als ein Fischfarming-Netz, als ein Raubtier-Schutznetz, als ein Gehegezaun, als eine Tunnelsicherung, als ein Hangmurenschutz, als ein Motorsport-Schutzzaun, als ein Straßenzaun, als eine Lawinensicherung, als eine Abdeckung und/oder Umhüllung von Gebäuden, als Explosionsschutz, als Geschossschutz, als Abschirmung gegen fliegende Objekte, als Fangnetz, oder als Rammschutz ausgebildetes Drahtnetz (10a) mit zumindest zwei ineinandergreifenden Netzelementen (12a), die jeweils aus zumindest einem Einzeldraht, einem Drahtbündel, einer Drahtlitze, einem Drahtseil und/oder einem anderen Längselement mit zumindest einem, Draht (14a) gefertigt sind,
mit zumindest einer Korrosionsüberwachungseinheit (18a), welche speziell dazu ausgelegt ist, zumindest einen Korrosionsindikator (20a) zu überwachen,
wobei der Korrosionsindikator (20a) eine durch eine Korrosion beeinflussbare Eigenschaft umfasst, welche indikativ für eine Korrosion des Drahtnetzes (10a) ist,
wobei mittels dem Korrosionsindikator (20a) eine momentane Stärke und/oder ein Fortschritt einer Korrosion zumindest eines Teils des überwachten Drahtnetzes (10a), bestimmbar ist,
wobei die Korrosionsüberwachungseinheit (18a-b) zumindest ein Korrosionskontrollelement (22a; 22'a) aufweist, welches speziell dazu ausgelegt ist, zumindest im Wesentlichen identischen Umgebungs- und/oder Witterungsbedingungen ausgesetzt zu werden wie das überwachte Drahtnetz (10a), um zumindest Teilinformationen zur Bestimmung des Korrosionsindikators (20a) zu liefern,
wobei das Korrosionskontrollelement (22a, 22'a) zumindest teilweise als ein ACM (Atmospheric Corrosion Monitor)-Sensor (216a) ausgebildet ist, wobei der ACM-Sensor (216a) zumindest zwei Elektroden (204a, 206a) umfasst, deren Oberflächenmaterialien aus unterschiedlich edlen Metallen ausgebildet sind, wobei die zwei Elektroden (204a, 206a) derart angeordnet sind, dass sie im trockenen Zustand durch einen die Elektroden trennenden Luftspalt elektrisch voneinander isoliert sind und in einem nassen Zustand über Wassertröpfchen, die ein Elektrolyt bilden, elektrisch in Kontakt sind, sodass bei der elektrischen Kontaktierung der Elektroden (204a, 206a) ein galvanischer Strom fließt,
wobei die eine Anode (210a) ausbildende Elektrode (204a) der zwei Elektroden (204a, 206a) eine Beschichtung (28a) aufweist, die zumindest im Wesentlichen identisch zu einer als Zinkbeschichtung, als Zink-Aluminiumbeschichtung und/oder als Zink-Aluminium-Magnesiumbeschichtung ausgebildeten Korrosionsschutzbeschichtung (30a) des Drahts (14a) des zu überwachenden Drahtnetzes (10a) ausgebildet ist.

2. Drahtnetzüberwachungsvorrichtung nach Anspruch 1, **dadurch gekennzeichnet, dass** die Korrosionsüberwachungseinheit (18a) zumindest ein Datenübertragungsmodul (38a) und zumindest ein Datenloggermodul (40a), welches dazu vorgesehen ist, zumindest eine Ausgabe des Datenübertragungsmoduls (38a) aufzuzeichnen, aufweist und/oder dass die Korrosionsüberwachungseinheit (18a) neben dem Datenübertragungsmodul (38a) zumindest ein Kommunikationsmodul (42a) aufweist, welches zumindest dazu vorgesehen ist, von dem Datenübertragungsmodul (38a) ausgegebene Daten an einen externen Empfänger (44a) zu kommunizieren.

3. Drahtnetzüberwachungsvorrichtung nach einem der vorhergehenden Ansprüche, **dadurch gekennzeichnet, dass** die Korrosionsüberwachungseinheit (18a) zumindest ein Korrekturmodul (46a) aufweist, welches zumindest dazu vorgesehen ist, potentiell auftretende systematische Fehler bei einer Überwachung der Korrosion zu erkennen und/oder zu korrigieren.

4. Drahtnetzüberwachungsvorrichtung nach einem der vorhergehenden Ansprüche, **dadurch gekennzeichnet, dass** die Korrosionsüberwachungseinheit (18a) eine elektrische Sensoreinheit (24a) mit zumindest ein Null-Ohm-Strommessgerät aufweist, das vorgesehen ist, einen galvanischen Strom des ACM-Sensors (216a) zu messen.

5. Drahtnetzüberwachungsvorrichtung nach einem der vorhergehenden Ansprüche, **dadurch gekennzeichnet, dass** das Korrosionskontrollelement (22a; 22'a) in einem Ausgangszustand einen Außenquerschnitt (34a) aufweist, welcher zumindest im Wesentlichen identisch zu einem Außenquerschnitt (36a) eines Drahts (14a) eines zu überwachenden Drahtnetzes (10a) in einem Auslieferungszustand des Drahtnetzes (10a) ist.

6. Drahtnetzüberwachungsvorrichtung nach einem der vorhergehenden Ansprüche, **dadurch gekennzeichnet, dass** die Korrosionsüberwachungseinheit (18a) zumindest ein weiteres Korrosionskontrollelement (48a; 48'a) aufweist.

7. Drahtnetzüberwachungsvorrichtung nach Anspruch 6, **dadurch gekennzeichnet, dass** das zumindest eine weitere Korrosionskontrollelement (48a; 48'a) eine räumliche Orientierung aufweist, die wesentlich verschieden von einer räumlichen Orientierung des Korrosionskontrollelements (22a; 22'a) ist.

8. Drahtnetzüberwachungsvorrichtung nach einem der vorhergehenden Ansprüche, **dadurch gekennzeichnet, dass** die Korrosionsüberwachungseinheit (18a) dazu vorgesehen ist, zumindest einen, von dem Korrosionsindikator (20a) verschiedenen weiteren Korrosionsindikator (52a) zu überwachen.

9. Drahtnetzüberwachungsvorrichtung nach Anspruch 8, **dadurch gekennzeichnet, dass** die Korrosionsüberwachungseinheit (18a) eine elektrische Sensoreinheit (24a) aufweist, die vorgesehen ist, den Korrosionsindikator (20a) zu überwachen, und wobei die Korrosionsüberwachungseinheit (18) zumindest eine weitere elektrische Sensoreinheit (54a) aufweist, welche dazu vorgesehen ist, den weiteren Korrosionsindikator (52a), insbesondere mit einer von einer Detektionsmethode des ACM-Sensors (216a) verschiedenen Detektionsmethode, zu überwachen.

10. Drahtnetzüberwachungsvorrichtung nach einem der vorhergehenden Ansprüche, **dadurch gekennzeichnet, dass** die Korrosionsüberwachungseinheit (18a) zumindest eine Umgebungssensoreinheit (56a) aufweist, welche dazu vorgesehen ist, zumindest einen Umgebungs- und/oder Witterungsparameter zu überwachen.

11. Drahtnetzüberwachungsvorrichtung nach einem der vorhergehenden Ansprüche, **dadurch gekennzeichnet, dass** die Korrosionsüberwachungseinheit (18a) zumindest eine Einschlagssensoreinheit (58a) aufweist, welche dazu vorgesehen ist, Einschläge dynamischer Einschlagskörper in ein zu überwachendes Drahtnetz (10a) zu sensieren.

12. Überwachungssystem (60a) mit einer Mehrzahl an miteinander vernetzten Drahtnetzüberwachungsvorrichtungen nach einem der vorhergehenden Ansprüche.

13. System (62a) zur Korrosionsüberwachung eines Drahtnetzes (10a) mit zumindest einer Drahtnetzüberwachungsvorrichtung nach einem der Ansprüche 1 bis 11 und mit zumindest einem Drahtnetz (10a), vorzugsweise mit einem Überwachungssystem (60a-b) nach Anspruch 12.

14. Verfahren zur Überwachung einer Korrosion eines Drahtnetzes (10a) mittels einer Drahtnetzüberwachungsvorrichtung nach einem der Ansprüche 1 bis 11, mit zumindest zwei ineinandergreifenden Netzelementen (12a), die jeweils aus zumindest einem Einzeldraht, einem Drahtbündel, einer Drahtlitze, einem Drahtseil und/oder einem anderen Längselement mit zumindest einem, insbesondere aus einem hochfesten Stahl (16a) gefertigten, Draht (14a) gefertigt sind, **dadurch gekennzeichnet, dass** zumindest ein Korrosionsindikator (20a) überwacht wird, wobei der Korrosionsindikator (20a) zumindest eine durch eine Korrosion beeinflussbare Eigenschaft umfasst, welche indikativ für eine Korrosion des Drahtnetzes (10a) ist, wobei mittels des Korrosionsindikators (20a) eine momentane Stärke und/oder ein Fortschritt einer Korrosion des Drahtnetzes (10a) bestimmbar ist, indem ein bei einer elektrischen Kontaktierung zweier Elektroden (204a, 206a) eines ACM-Sensors (216a) fließender galvanischer Strom gemessen wird, wobei die eine Anode (210a) ausbildende Elektrode (204a) der zwei Elektroden (204a, 206a) eine Beschichtung (28a) aufweist, die zumindest im Wesentlichen identisch zu einer Korrosionsschutzbeschichtung (30a) des Drahts (14a) des zu überwachenden Drahtnetzes (10a) ausgebildet ist.

15. Verfahren nach Anspruch 14, **dadurch gekennzeichnet, dass** zumindest eine Stärke einer Korrosion mittels eines Stromwerts eines Stromflusses bestimmt wird.

16. Verfahren nach einem der Ansprüche 14 oder 15, **dadurch gekennzeichnet, dass** bei einem Überschreiten, Unterschreiten und/oder Erreichen eines Schwellenwerts (70a) des Korrosionsindikators (20a) eine automatische Benachrichtigung ausgelöst wird.

## Claims

1. Wire netting monitoring device
for a wire netting (10a) realized as a slope stabilization, as a safety fence, as a catch fence, as a rockfall protective net, as a barrier fence, as a fish farming net, as a predator protection net, as an enclosure fence, as a tunnel safeguard, as a landslide protection, as a motorsport protective fence, as a road fence, as a covering and/or cladding of buildings, as an explosion protection, as a projectile protection, as a shielding against flying objects, as a capturing net or as a ram protection,
said wire netting (10a) having at least two mutually engaging net elements (12a), which are respectively produced from at least one single wire, a wire bundle, a wire strand, a wire rope and/or some other longitudinal element comprising at least one wire (14a),
with at least one corrosion monitoring unit (18a), which is specifically configured for monitoring at least one corrosion indicator (20a),
wherein the corrosion indicator (20a) has a corrosion-influenceable property which is indicative of a corrosion of the wire netting (10a),
wherein an instantaneous intensity and/or a progress of a corrosion at least of a portion of the monitored wire netting (10a) is determinable by means of the corrosion indicator (20a),
wherein the corrosion monitoring unit (18a) comprises at least one corrosion checking element (22a; 22'a) which is specifically configured to be exposed to ambient and/or weather conditions that are at least substantially identical to those which the monitored wire netting (10a) is exposed to in order to supply at least partial information for a determination of the corrosion indicator (20a),
wherein the corrosion checking element (22a, 22'a) is embodied at least partly as an ACM (Atmospheric Corrosion Monitor) sensor (216a), the ACM sensor (216a) comprising at least two electrodes (204a, 206a) whose surface materials are made of metals having different electropositivities,
wherein the two electrodes (204a, 206a) are arranged in such a way that, in a dry state, they are electrically insulated from one another by an air gap that separates the electrodes and,
in a wet state, they are electrically in contact via water droplets forming an electrolyte,
such that a galvanic current flows if there is electrical contacting of the electrodes,
wherein the electrode (204a) of the two electrodes (204a, 206a) that forms the anode (210a) has a coating (28a) that is realized at least substantially identically to an anticorrosion protective coating (30a) of the wire (14a) of the wire netting (10a) to be monitored, which is realized as a zinc coating, as a zinc-aluminum coating and/or as a zinc-aluminum-magnesium coating.

2. Wire netting monitoring device according to claim 1,
**characterized in that** the corrosion monitoring unit (18a) comprises at least one data transfer module (38a) and at least one data logger module (40a) that is configured at least for recording an output of the data transfer module (38a),
and/or that the corrosion monitoring unit (18a) comprises, in addition to the data transfer module (38a), at least one communication module (42a) that is configured at least for communicating data outputted by the data transfer module (38a) to an external receiver (44a).

3. Wire netting monitoring device according to any one of the preceding claims,
**characterized in that** the corrosion monitoring unit (18a) comprises at least one correction module (46a) configured at least for identifying and/or correcting systematic errors which potentially occur during a monitoring of the corrosion.

4. Wire netting monitoring device according to any one of the preceding claims,
**characterized in that** the corrosion monitoring unit (18a) comprises an electrical sensor unit (24a) with at least one zero-resistance ammeter that is configured for measuring a galvanic current of the ACM sensor (216a).

5. Wire netting monitoring device according to any one of the preceding claims,
**characterized in that** the corrosion checking element (22a; 22'a) in an initial state has an outer cross section (34a) which is at least substantially identical to an outer cross section (36a) of a wire (14a) of a wire netting (10a) to be monitored in a delivery state of the wire netting (10a).

6. Wire netting monitoring device according to any one of the preceding claims,
**characterized in that** the corrosion monitoring unit (18a) comprises at least one further corrosion checking element (48a; 48a').

7. Wire netting monitoring device according to claim 6,
**characterized in that** the at least one further corrosion checking element (48a; 48'a) has a spatial orientation which is significantly different than a spatial orientation of the corrosion checking element (22a; 22'a).

8. Wire netting monitoring device according to any one of the preceding claims,
**characterized in that** the corrosion monitoring unit (18a) is configured for monitoring at least one further corrosion indicator (52a) that differs from the corrosion indicator (20a).

9. Wire netting monitoring device according to claim 8,
**characterized in that** the corrosion monitoring unit (18a) comprises an electrical sensor unit (24a) configured for monitoring the corrosion indicator (20a),
and wherein the corrosion monitoring unit (18a) comprises at least one further electrical sensor unit (54a) configured for monitoring the further corrosion indicator (52a), in particular by a detection method that differs from a detection method of the ACM sensor (216a).

10. Wire netting monitoring device according to any one of the preceding claims,
**characterized in that** the corrosion monitoring unit (18a) comprises at least ambient sensor unit (56a) configured for monitoring at least one ambient and/or weather parameter.

11. Wire netting monitoring device according to any one of the preceding claims,
**characterized in that** the corrosion monitoring unit (18a) comprises at least one impact sensor unit (58a) configured for sensing impacts of dynamic impact bodies into a wire netting (10a) to be monitored.

12. Monitoring system (60a)
having a plurality of interconnected wire netting monitoring devices according to any one of the preceding claims.

13. System (62a) for monitoring of a corrosion of a wire netting (10a), having at least one wire netting monitoring device according to any one of claims 1 to 11
and having at least one wire netting (10a), preferably with a monitoring system (60a) according to claim 12.

14. Method for monitoring a corrosion of a wire netting (10a) by means of a wire netting monitoring device according to any one of claims 1 to 11, having at least two mutually engaging net elements (12a), which are respectively produced from at least one single wire, a wire bundle, a wire strand, a wire rope and/or some other longitudinal element comprising at least one wire (14a), which is in particular produced from a high-tensile steel (16a),
**characterized in that** at least one corrosion indicator (20a) is monitored, the corrosion indicator (20a) having at least one corrosion-influenceable property which is indicative for a corrosion of the wire netting (10a), wherein an instantaneous intensity and/or a progress of a corrosion of the wire netting (10a) is determinable by means of the corrosion indicator (20a) via measuring a galvanic current that flows when two electrodes (204a, 206a) of an ACM sensor (216a) are electrically contacted, wherein the electrode (204a) of the two electrodes (204a, 206a) that forms the anode (210a) has a coating (28a) realized at least substantially identically to an anticorrosion protective coating (30a) of the wire (14a) of the wire netting (10a) to be monitored.

15. Method according to claim 14,
**characterized in that** at least an intensity of a corrosion is determined on the basis of a current value of a current flow.

16. Method according to any one of claims 14 or 15,
**characterized in that** an automatic notification is triggered in the event of a threshold value (70a) of the corrosion indicator (20a) being exceeded, undershot and/or reached.

## Revendications

1. Dispositif de surveillance de toile métallique
pour une toile métallique (10a) réalisée sous la forme d'une sécurisation de talus, d'une clôture de sécurité, d'une clôture de capture, d'une toile de protection contre chute-pierre, d'une clôture d'arrêt, d'une toile de pisciculture, d'une toile de protection contre les prédateurs, d'une clôture d'enclos, d'une protection de tunnel, d'une protection contre les débris, d'une clôture protective au sport automobile, d'une clôture routière, d'une protection contre les avalanches, d'un recouvrement et/ou d'une enveloppe de bâtiments, d'une protection contre les explosions, d'une protection contre les projectiles, d'une protection contre les objets volants, d'un filet de capture ou d'une protection pare-buffle, avec au moins deux éléments de toile (12a) s'engageant l'un dans l'autre, qui sont fabriqués à chaque fois d'au moins un fil métallique individuel, d'un faisceau de fils, d'un toron métallique, d'un câble métallique et/ou d'un autre élément longitudinal ayant au moins un fil métallique (14a),
avec au moins une unité à surveillance de corrosion (18a), qui est spécialement conçue pour surveiller au moins un indicateur de corrosion (20a),
où l'indicateur de corrosion (20a) comprend une propriété qui peut être influencée par une corrosion et est indicative d'une corrosion de la toile métallique (10a),
où une intensité instantanée et/ou une progression d'une corrosion au moins d'une partie de la toile métallique (10a) surveillée peut être déterminée moyennant l'indicateur de corrosion (20a),
où l'unité à surveillance de corrosion (18a) comprend au moins un élément de contrôle de corrosion (22a ; 22'a) qui est spécialement conçu pour être exposé à des conditions environnementales et/ou météorologiques au moins sensiblement identiques à celles de la toile métallique (10a) surveillée, afin de fournir au moins des informations partielles pour la détermination de l'indicateur de corrosion (20a),
où l'élément de contrôle de corrosion (22a, 22'a) est réalisé au moins en partie comme capteur ACM (Atmospheric Corrosion Monitor) (216a), le capteur ACM (216a) comprenant au moins deux électrodes (204a, 206a) dont les matériaux de surface sont réalisés à partir de métaux de degrés de noblesse différents, où les deux électrodes (204a, 206a) sont disposées de telle manière qu'elles sont dans l'état sec isolées électriquement l'une de l'autre par un entrefer séparant les électrodes et sont dans l'état humide en contact électrique par l'intermédiaire de gouttelettes d'eau qui forment un électrolyte, de sorte qu'un courant galvanique circule lors de la mise en contact électrique des électrodes (204a, 206a),
où l'électrode (204a) des deux électrodes (204a, 206a) qui réalise une anode (210a) comprend un revêtement (28a) formé au moins sensiblement identique à un revêtement anticorrosion (30a) du fil métallique (14a) de la toile métallique (10a) à surveiller, laquelle est réalisé comme revêtement de zinc, comme revêtement de zinc-aluminium et/ou comme revêtement de zinc-aluminium-magnésium.

2. Dispositif de surveillance de toile métallique selon la revendication 1, **caractérisé en ce que** l'unité à surveillance de corrosion (18a) comprend au moins un module à transmission de données (38a) et au moins un module enregistreur de données (40a) qui est prévu pour enregistrer au moins une sortie du module de transmission de données (38a), et/ou **en ce que** l'unité à surveillance de corrosion (18a) comprend, en plus du module de transmission de données (38a), au moins un module de communication (42a) qui est au moins prévu pour communiquer des données sorties par le module de transmission de données (38a) à un récepteur externe (44a).

3. Dispositif de surveillance de toile métallique selon l'une des revendications précédentes,
**caractérisé en ce que** l'unité à surveillance de corrosion (18a) comprend au moins un module correcteur (46a) qui est au moins prévu pour détecter et/ou corriger des erreurs systématiques survenant potentiellement lors d'une surveillance de la corrosion.

4. Dispositif de surveillance de toile métallique selon l'une des revendications précédentes,
**caractérisé en ce que** l'unité à surveillance de corrosion (18a) comprend une unité électrique de captage (24a) avec au moins un appareil de mesure de courant à zéro ohm prévu pour mesurer un courant galvanique du capteur ACM (216a).

5. Dispositif de surveillance de toile métallique selon l'une des revendications précédentes,
**caractérisé en ce que** l'élément de contrôle de corrosion (22a ; 22'a) présente dans un état initial une coupe transversale extérieure (34a) au moins sensiblement identique à une coupe transversale extérieure (36a) d'un fil métallique (14a) d'une toile métallique (10a) à surveiller dans un état de livraison de la toile métallique (10a).

6. Dispositif de surveillance de toile métallique selon l'une des revendications précédentes,
**caractérisé en ce que** l'unité à surveillance de corrosion (18a) comprend au moins un autre élément de contrôle de corrosion (48a ; 48'a).

7. Dispositif de surveillance de toile métallique selon la revendication 6, **caractérisé en ce que** l'au moins un autre élément de contrôle de corrosion (48a ; 48'a) présente une orientation spatiale qui est sensiblement différente d'une orientation spatiale de l'élément de contrôle de corrosion (22a ; 22'a).

8. Dispositif de surveillance de toile métallique selon l'une des revendications précédentes,
**caractérisé en ce que** l'unité à surveillance de corrosion (18a) est prévue pour surveiller au moins un autre indicateur de corrosion (52a) qui diffère de l'indicateur de corrosion (20a).

9. Dispositif de surveillance de toile métallique selon la revendication 8, **caractérisé en ce que** l'unité à surveillance de corrosion (18a) comprend une unité électrique de captage (24a) qui est prévue pour surveiller et où l'unité à surveillance de corrosion (18a) comprend au moins une autre unité électrique de captage (54a) qui est prévue pour surveiller l'autre indicateur de corrosion (52a), en particulier avec une méthode de détection différente d'une méthode de détection du capteur ACM (216a).

10. Dispositif de surveillance de toile métallique selon l'une des revendications précédentes,
**caractérisé en ce que** l'unité à surveillance de corrosion (18a) comprend au moins une unité de captage d'environnement (56a) prévue pour surveiller au moins un paramètre environnemental et/ou météorologique.

11. Dispositif de surveillance de toile métallique selon l'une des revendications précédentes,
**caractérisé en ce que** l'unité à surveillance de corrosion (18a) comprend au moins une unité de captage d'impact (58a) prévue pour capter des impacts de corps d'impact dynamiques dans une toile métallique (10a) à surveiller.

12. Système de surveillance (60a)
comprenant une pluralité de dispositifs de surveillance de toile métallique interconnectés
selon l'une des revendications précédentes.

13. Système (62a) pour la surveillance de corrosion d'une toile métallique (10a) avec au moins un dispositif de surveillance de toile métallique selon l'une des revendications 1 à 11
et avec au moins une toile métallique (10a), de préférence comprenant un système de surveillance (60a-b) selon la revendication 12.

14. Procédé de surveillance d'une corrosion d'une toile métallique (10a) moyennant un dispositif de surveillance de toile métallique selon l'une des revendications 1 à 11,
avec au moins deux éléments de toile (12a) s'engageant l'un dans l'autre, qui sont fabriqués à chaque fois d'au moins un fil métallique individuel, d'un faisceau de fils, d'un toron métallique, d'un câble métallique et/ou d'un autre élément longitudinal ayant au moins un fil métallique (14a) fabriqué en particulier d'un acier à haute résistance (16a),
**caractérisé en ce qu'**au moins un indicateur de corrosion (20a) est surveillé, ledit indicateur de corrosion (20a) ayant au moins une propriété qui peut être influencée par une corrosion et est indicative d'une corrosion de la toile métallique (10a),
où une intensité instantanée et/ou une progression d'une corrosion de la toile métallique (10a) peut être déterminée moyennant l'indicateur de corrosion (20a) en mesurant un courant galvanique circulant lors d'une mise en contact électrique de deux électrodes (204a, 206a) d'un capteur ACM (216a),
où l'électrode (204a) des deux électrodes (204a, 206a) qui réalise une anode (210a) comprend un revêtement (28a) formé au moins sensiblement identique à un revêtement anticorrosion (30a) du fil métallique (14a) de la toile métallique (10a) à surveiller.

15. Procédé selon la revendication 14,
**caractérisé en ce qu'**au moins une intensité d'une corrosion est déterminée moyennant une valeur de courant d'un flux de courant.

16. Procédé selon l'une des revendications 14 ou 15,
**caractérisé en ce qu'**une notification automatique est déclenchée en cas de dépassement, de sous-dépassement et/ou d'atteinte d'une valeur seuil (70a) de l'indicateur de corrosion (20a).
